# EUROPEAN PATENT APPLICATION

(11) **EP 1 894 661 A2**
(43) Date of publication of application: **05.03.2008**
(21) Application number: 07250812.0
(22) Date of filing: 27.02.2007
(51) Int. Cl.: B23K 20/233, B23K 20/12, B61D 17/04, B61D 17/18, B23K 101/04, B23K 103/20

(54) **Method for manufacturing a structure and such a structure**

(30) Priority: 30.08.2006 JP 2006232993
(71) Applicant: Hitachi, Ltd., Chiyoda-ku Tokyo 100-8280 (JP)
(72) Inventor: Ezumi, Masakuni, c/o Hitachi, Ltd., Chiyoda-ku Tokyo 100-8220 (JP); Todori, Seijiro, c/o Hitachi, Ltd., Chiyoda-ku Tokyo 100-8220 (JP); Okada, Norihisa, c/o Hitachi, Ltd., Chiyoda-ku Tokyo 100-8220 (JP); Sagawa, Toshiaki, c/o Hitachi, Ltd., Chiyoda-ku Tokyo 100-8220 (JP)
(74) Representative: Paget, Hugh Charles Edward

(57) **Abstract**

The invention provides a method for friction stir welding a stainless steel panel to an extruded aluminum alloy shape member. A side structure (2) of a car body (1) is formed by friction stir welding aluminum alloy extruded hollow shape members (30 and 40) from the inner side of the car. On the outer side of the side structure (2) are stainless steel panels (10 and 20) friction stir welded to the butted portion between hollow shape members (30 and 40) from the inner side of the car. After friction stir welding the butted portion between hollow shape members (30 and 40), inner face plates (31 and 41) of the hollow shape members (30 and 40) are connected via a connecting member (51). According to the present method, scratches on the surface of the car body can be reduced by arranging stainless steel panels (10 and 20) on the outer side of the car. It is possible to arrange heat insulation members between the stainless steel panels and the hollow shape members.

## Description

### BACKGROUND OF THE INVENTION

### Field of the invention

The present invention relates to a method for friction stir welding a stainless steel panel to an extruded shape member made of aluminum alloy, and a structure manufactured by the method.

The term structure refers to a structure such as a car body or a structure formed by welding together stainless steel panels and extruded shape members made of aluminum alloy.

The term car body refers to a car body of a railway vehicle such as a railway car body or a monorail car body. The term car body can also refer to a side structure, which constitutes a portion of the body of a railway vehicle.

### Description of the related art

Japanese Patent No. 3014564 (EP00797043, patent document 1) discloses a car body formed by friction stir welding extruded hollow shape members made of aluminum alloy, which enables to achieve a light-weight, inexpensive and high-rigidity car body, and is adopted widely. However, extruded shape members made of aluminum alloy are relatively soft, and scratches are easily formed on the outer surface of the car body. Furthermore, the aluminum alloy members are susceptible to discoloration due to water leak in tunnels, so they must be applied with a coating.

Further, Japanese PatentApplication Laid-Open Publication No. 4-100769 (patent document 2) discloses manufacturing a railway car body by welding stainless steel panels.

Japanese Patent Application Laid-Open Publication No. 2004-276724 (patent document 3) discloses manufacturing a car body of a railway car by friction stir welding stainless steel panels. According to the disclosed art, scratches can be reduced, but it is difficult to form a light-weight car body or to cut down the costs. In addition, friction stir welding of stainless steel panels cannot be performed as easily as friction stir welding aluminum alloy. In the current state, stainless steel panels cannot be formed into extruded shape members, especially hollow shape members, and therefore, it is difficult to use stainless steel panels to form a light-weight and inexpensive structure.

Dawes, "An Introduction to Friction Stir Welding and Its Development", in Welding & Metal Fabrication, Jan. 1995, pp. 13, 14 and 16 (non-patent document 1) discloses in FIG. 6d a method for superposing a plurality of metal panels and friction stir welding the overlapped portion.

Japanese Patent Application Laid-Open Publication No. 55-31694 (patent document 4) discloses joining a side structure and a roof structure and joining a side structures and an underframe via fastening members such as bolts.

As mentioned above, extruded shape members made of aluminum alloy can be utilized to manufacture a light-weight structure easily, but they have a drawback in that they are susceptible to scratches.

Stainless steel panels have strong resistance to scratches, but they are not suitable for manufacturing a light-weight body inexpensively.

### SUMMARY OF THE INVENTION

The object of the present invention is to provide a method for manufacturing a structure by friction stir welding stainless steel panels to extruded shape members made of aluminum alloy.

According to aspect 1, the present invention characterizes in overlapping one or a plurality of extruded shape members made of aluminum alloy on a stainless steel panel, and friction stir welding either a butted portion or an overlapped portion between extruded shape members made of aluminum alloy, and friction stir welding the butted portion or the overlapped portion to the stainless steel panel, wherein the friction stir welding is performed intermittently along a longitudinal direction of the friction stir welding.

According to the above arrangement, stainless steel panels can be friction stir welded in a manner similar to friction stir welding extruded shape members made of aluminum alloy. Since the stainless steel panels are arranged on an outer side of the structure constituting the visible areas of the structure, the visible areas are not susceptible to scratches. Furthermore, since the structure is composed of extruded shape members, it can be manufactured inexpensively.

The objects of aspect 5 of the present invention are the same as those of aspect 1.

Aspect 5 characterizes in overlapping an extruded shape member made of aluminum alloy on a stainless steel panel, and friction stir welding the stainless steel panel and the extruded shape member made of aluminum alloy.

According to the above arrangement, effects equivalent to those of aspect 1 can be achieved.

The objects of aspect 11 of the present invention are the same as those of aspect 1.

Aspect 11 characterizes in overlapping a first extruded shape member made of aluminum alloy and a second extruded shape member made of aluminum alloy on a stainless steel panel, and friction stir welding either a butted portion or an overlapped portion between the first extruded shape member and the second extruded shape member made of aluminum alloy to the stainless steel panel.

According to the present invention, effects equivalent to those of aspect 1 can be achieved.

The objects of aspect 13 of the present invention are the same as those of aspect 1.

Aspect 13 characterizes in butting or overlapping a width-direction end of a first stainless steel panel with a width-direction end of a second stainless steel panel, overlapping a first extruded shape member made of aluminum alloy on the first stainless steel panel and overlapping a second extruded shape member made of aluminum alloy on the second stainless steel panel, butting or overlapping a width-direction end of the first extruded shape member made of aluminum alloy with a width-direction end of the second extruded shape member made of aluminum alloy, arranging the butted or overlapped portion of the extruded shape members made of aluminum alloy and the butted or overlapped portion of the stainless steel panels to be positioned substantially at a same position with respect to a right angle of the direction of extrusion of the extruded shape members made of aluminum alloy, and friction stir welding the butted portion or the overlapped portion of the extruded shape members made of aluminum alloy to the butted or overlapped portion of the stainless steel panels.

According to the present invention, effects equivalent to those of aspect 1 can be achieved.

The objects of aspect 20 of the present invention are the same as those of aspect 1.

Aspect 20 characterizes in overlapping at least two extruded shape members made of aluminum alloy on a stainless steel panel, butting or overlapping a width-direction end of a first extruded shape member made of aluminum alloy with a width-direction end of a second extruded shape member made of aluminum alloy of the two extruded shape members, arranging a plurality of sets of extruded shape members, each set composed of the first and second extruded shape members made of aluminum alloy, if the stainless steel panel is composed of a single panel, arranging the butted portion or the overlapped portion of the extruded shape members made of aluminum alloy within the single panel, and if the stainless steel panel is composed of a plurality of panels, butting or overlapping a width-direction end of one stainless steel panel with that of the other panel, performing friction stir welding continuously to weld the butted portion or the overlapped portion of the extruded shape members made of aluminum alloy along a longitudinal direction of friction stir welding, and performing friction stir welding intermittently to weld the extruded shape members made of aluminum alloy to the butted portion or the overlapped portion of the stainless steel panel along the longitudinal direction of friction stir welding.

According to the present invention, effects equivalent to those of aspect 1 can be achieved.

The objects of aspect 22 of the present invention are the same as those of aspect 1.

Aspect 22 of the present invention characterizes in overlapping a first extruded shape member made of aluminum alloy and a second extruded shape member made of aluminum alloy on a stainless steel panel, butting or overlapping a width-direction end of the first extruded shape member made of aluminum alloy with a width-direction end of the second extruded shape member made of aluminum alloy, friction stir welding the first and second extruded shape members made of aluminum alloy and also friction stir welding the same to the stainless steel panel, and forming a side structure of a car body by arranging the stainless steel panel on an outer side than the first and second extruded shape members made of aluminum alloy.

According to the present invention, effects equivalent to those of aspect 1 can be achieved.

The objects of aspect 27 of the present invention are the same as those of aspect 1.

Aspect 27 of the present invention characterizes in overlapping a first extruded shape member made of aluminum alloy and a second extruded shape member made of aluminum alloy on a stainless steel panel; and friction stir welding either a butted portion or an overlapped portion between the first extruded shape member and the second extruded shape member made of aluminum alloy from a portion corresponding to an inner side of the structure, and friction stir welding the same to the stainless steel panel.

According to the present invention, effects equivalent to those of aspect 1 can be achieved.

The object of aspect 32 of the present invention is to provide a structure having superior heat insulation property. The other objects are the same as those of aspect 1.

Aspect 32 of the present invention characterizes in providing a space for forming a clearance to a surface facing the other member on at least either a stainless steel panel or an extruded shape member made of aluminum alloy, and overlapping the extruded shape member formed of aluminum alloy on the stainless steel panel and friction stir welding a portion without the clearance.

The present invention enables to provide a structure having a clearance between the stainless steel panels and the extruded shape members made of aluminum alloy and having superior heat insulation property. Furthermore, effects equivalent to those of aspect 1 can be achieved.

The objects of aspect 34 of the present invention are the same as those of aspect 32.

Aspect 34 of the present invention characterizes in overlapping an extruded shape member made of aluminum alloy on a stainless steel panel with a clearance therebetween, and friction stir welding the extruded shape member made of aluminum alloy to the stainless steel panel at an overlapped portion without the clearance.

According to the present invention, effects equivalent to those of aspect 32 can be achieved.

Aspect 37 of the present invention relates to solving the drawback caused by friction stir welding stainless steel panels to extruded shape members made of aluminum alloy, in which the stainless steel panels may be separated from the extruded shape members made of aluminum alloy and expanded due to the shrinkage ratio of stainless steel panels being smaller than the shrinkage ratio of extruded shape members made of aluminum alloy, thereby deteriorating appearance. The invention of aspect 37 aims at suppressing this phenomenon. Other obj ects are the same as those of aspect 1.

Aspect 37 characterizes in overlapping an extruded shape member made of aluminum alloy on a stainless steel panel, and friction stir welding the extruded shape member made of aluminum alloy on the stainless steel panel being heated, wherein the friction stir welding is performed at both width-direction ends of the extruded shape member made of aluminum alloy.

Friction stir welding causes the stainless steel panels to be expanded since the extruded shape members made of aluminum alloy at the welded portion shrink and the shrinkage of the extruded shape members made of aluminum alloy is greater than the shrinkage of the stainless steel panels disposed on the outer side of the structure, but according to the present invention, since the stainless steel panel is subjected to friction stir welding in a heated state, the expansion thereof can be suppressed. Other effects are the same as those of aspect 1.

The objects of aspect 38 of the present invention are the same as those of aspect 37.

Aspect 38 characterizes in overlapping an extruded shape member made of aluminum alloy on a stainless steel panel having beads in the form of a circular arc protruded toward an outer side of the structure along a longitudinal direction thereof, and friction stir welding the extruded shape member made of aluminum alloy on the stainless steel panel.

According to this invention, the expansion of the stainless steel panel is aggregated at the beads, and the visibility of the expansion can be suppressed.

The object of aspect 74 of the present invention is to provide an apparatus for friction stir welding the heated stainless steel panels disclosed in aspect 38.

Aspect 74 characterizes in comprising a base for placing a stainless steel panel and an extruded shape member made of aluminum alloy on the stainless steel panel, the base having a heater for heating the stainless steel panel, and a rotary tool for friction stir welding provided above the base for friction stir welding the stainless steel panel to the extruded shape member made of aluminum alloy.

According to aspect 74 of the invention, since a heater is provided in the base for placing the stainless steel panel, it becomes possible to heat the stainless steel panel, increase the shrinkage of the stainless steel panel and prevent expansion of the stainless steel panel.

The obj ect of aspect 75 of the present invention is to provide a railway vehicle capable of having the side structure and the roof structure thereof joined easily.

Aspect 75 characterizes in comprising a width-direction end of a roof structure mounted on a projection protruded from a side structure toward the roof structure, and a Huckbolt (trade name) fastened from above to fix the mounted portion to the projection.

According to this arrangement, the joining of the side structure and the roof structure can be performed easily.

The object of aspect 77 of the present invention is to provide a railway vehicle capable of having the side structure and the underframe thereof joined easily.

Aspect 77 characterizes in comprising a projection protruding toward an underframe formed on a side beam at a lower portion of a side structure, the projection overlapped with an upper surface of a hollow shape member constituting the underframe, a Huckbolt (trade name) engaging the overlapped portion from above, a spacer arranged between the projection and the hollow shape member, and a projection protruded downward from the hollow shape member is overlapped on a vertical plane of the sidebeam, wherein a second Huckbolt fastens the overlapped portion froman inner side of the carbody in the lateral direction.

According to this arrangement, the side structure can be joined to the underframe easily.

The obj ect of aspect 80 of the present invention is to provide a railway vehicle capable of having the side structure joined to the underframe easily.

Aspect 80 characterizes in comprising a first hollow shape member of an underframe having a projection rising along a vertical plane of a second hollow shape member of a side structure, a Huckbolt engaging the projection from an inner side of the car body to the first hollow shape member, and a projection protruding downward from the hollow shape member being overlapped on a vertical plane of a side beam, wherein a second Huckbolt fastens the overlapped portion from the inner side of the car body in the lateral direction.

According to this arrangement, the side structure can be joined to the underframe easily.

The obj ect of aspect 81 of the present invention is to provide a railway vehicle capable of having the interior panel attached inexpensively.

Aspect 81 characterizes in comprising a heat insulation member disposed on a side structure or a roof structure on an inner side of a car body thereof, the heat insulation member covered with an interior panel, wherein when the interior panel is attached to the car body, a circumferential endportion thereof is fixed to a rail protruded from the side structure or the roof structure toward an inner side of the car body, the rail is extended along a longitudinal direction of the car body, the rail has a groove disposed along the longitudinal direction at an end toward the inner side of the car body, the end of the interior panel is inserted to the groove, and a press-fitmember is inserted between the end of the interior panel and the rail, or between adjacent interior panel ends.

According to the present arrangement, the interior panel can be fixed easily without using screws.

### BRIEF DESCRIPTION OF THE DRAWINGS

FIG. 1 is a perspective view of the car body according to one embodiment of the present invention viewed from the exterior;
FIG. 2 is a cross-sectional view taken at II-II of FIG. 1 ;
FIG. 3 is a cross-sectional view taken at III-III of FIG. 1 and an enlarged view of portion III of FIG. 2;
FIG. 4 is an enlarged view of portion IV of FIG. 2;
FIG. 5 is an enlarged view of portion V of FIG. 2;
FIG. 6 is an enlarged view of portion VI of FIG. 2;
FIG. 7 is a side view of a car body showing the portion subjected to friction stir welding between a hollow shape member and a stainless steel panel according to one embodiment of the present invention;
FIG. 8 is a view corresponding to FIG. 3 according to another embodiment of the present invention;
FIG. 9 is an enlarged vertical cross-sectional view of a portion subjected to friction stir welding between the hollow shape member and the stainless steel panel according to FIG. 8 and corresponding to FIGS. 4 and 8;
FIG. 10 is an enlarged vertical cross-sectional view of a joint portion between an upper end of a side structure and a roof structure of FIG. 2;
FIG. 11 is a vertical cross-sectional view showing the relevant portion of the side structure of FIG. 2, which connects to FIGS. 10 and 12;
FIG. 12 is an enlarged vertical cross-sectional view of a joint portion between a lower end of a side structure and an underframe of FIG. 2;
FIG. 13 is a view corresponding to FIG. 8 according to another embodiment of the present invention;
FIG. 14 is a view corresponding to FIG. 8 according to another embodiment of the present invention;
FIG. 15 is a vertical cross-sectional view taken at IV-IV of FIG. 1;
FIG. 16 is a vertical cross-sectional view taken at IVI-IVI of FIG. 1; and
FIG. 17 is an enlarged view of portion XVII of FIG. 11.

### DETAILED DESCRIPTION OF THE PREFERRED EMBODIMENTS

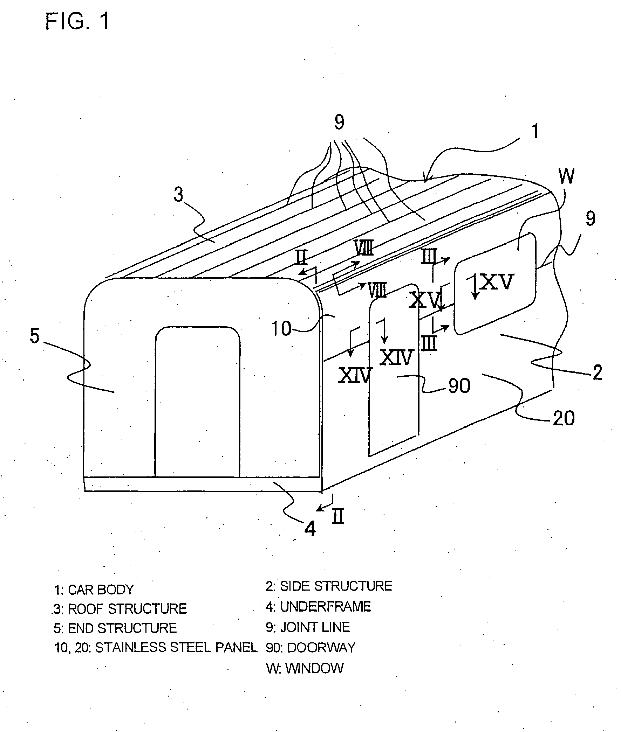

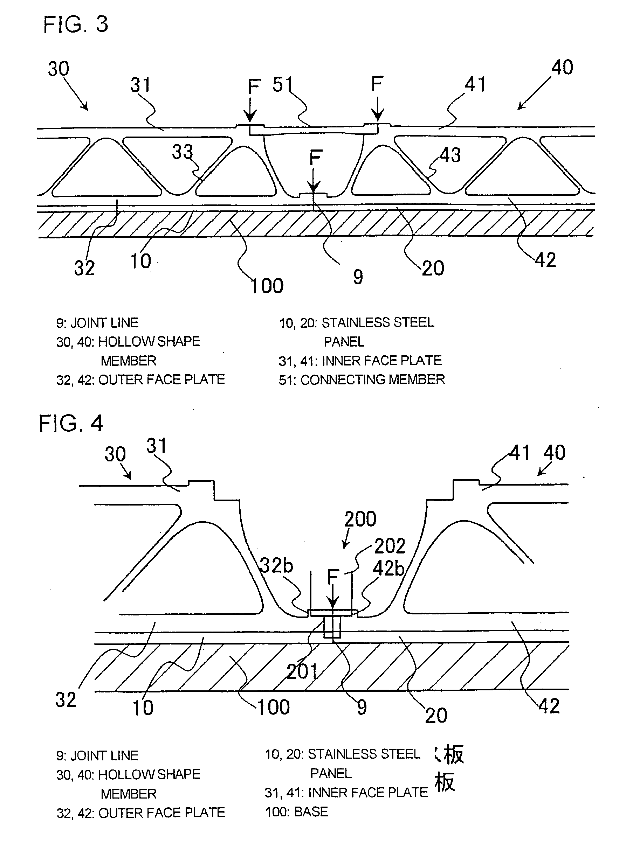

Now, one preferred embodiment of the present invention will be described with reference to FIGS. 1 through 4. FIG. 3 is a cross-sectional view taken at line III-III of FIG. 1, and should be presented in a vertically longitudinal view, but is illustrated horizontally longitudinally in order to illustrate the manufacturing method. The same applies for FIGS. 4, 5, 7, 9, 13 and 14.

### [Embodiment 1]

As well known, a car body 1 as illustrated in FIG. 1 is composed of side structures 2, a roof structure 3, an underframe 4 on which the side structures 2 are mounted, and end structures 5 enclosing the longitudinal ends of the space defined by the side structures 2, the roof structure 3 and the underframe 4. The side structures 2 are formed by welding apluralityof extruded hollow shape members 30 and 40 made of aluminum alloy. The roof structure 3 and the underframe 4 are formed in a similar manner.

Stainless steel panels 10 and 20 are disposed on the outer side of the car of the side structure 2. The side structure 2 is composed of the stainless steel panels 10 and 20 and a plurality of extruded hollow shape members 30 and 40 made of aluminum alloy disposed on the inner side of the car.

The plurality of hollow shape members 30 and 40 are integrated via friction stir welding. Friction stir welding is a well-known art. The butted portion between stainless steel panels 10 and 20 is attached via friction stir welding to the butted portion between hollow shape members 30 and 40.

The side structure 2 can be composed of two hollow shape members 30 and 40, but since it is impossible to manufacture such large hollow shape members, the side structure 2 is formed by arranging a plurality of hollow shape members 30 and 40 and friction stir welding the butted ends thereof, and arranging a plurality of stainless steel panels 10 and 20 and friction stir welding the butted ends thereof.

Reference number 9 denotes a line showing the friction stir weld joint portion of the stainless steel panels 10 and 20. Generally, the joint line 9 passes transversely across the window W in the transverse direction or horizontal direction. Line 9 is formed on the inner side of the car.

The butted portion between stainless steel panels 10 and 20 are welded via friction stir welding to the butted portion between hollow shape members 30 and 40.

Windows W and doorways 90 are formed on the side wall of the side structure 2 of the car body 1. Each doorway 90 has a frame 55 for reinforcing the doorway. The frame 55 extends from the inner side to the outer side of the car. The outer side of the frame 55 is welded via friction stir welding to the hollow shape members 30 and 40 and stainless steel panels 10 and 20.

The stainless steel panels 10 and 20 are attached only on the outer side of the car of the side structures 2 of the car body, and not on the roof structure 3, the end structures 5 and the lower side of the underframe 4 on which the side structures are mounted where the surface is not visible or accessible to the passengers.

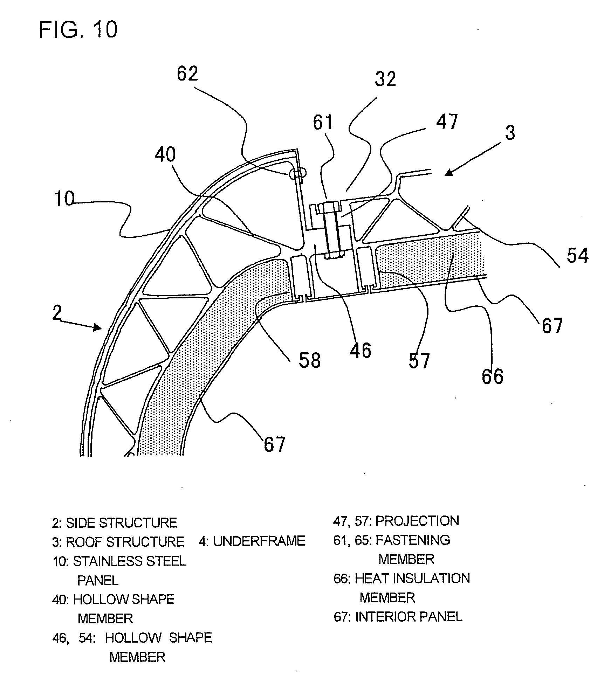

In general, the side structures 2 are connected to the roof structure 3, the end structures 5 and the underframe 4 via welding, but according to the present embodiment, there are stainless steel panels 10 and 20 attached to the outer surface of the hollow shape members 30 and 40 of the side structures, which cannot easily be welded to the roof structure 3, the end structures 5 and the underframe 4 made of aluminum alloy adjacent to the aluminum-alloy extruded shape members and stainless steel panels of the side structures, so that the side structures 2 are attached to the roof structure 3, the end structures 5 and the underframe 4 via fastening tools (not shown) such as rivets, bolts and Huckbolts (Huckbolt: trade name). This arrangement is described in further detail with reference to FIGS. 10, 11, 12 and 17.

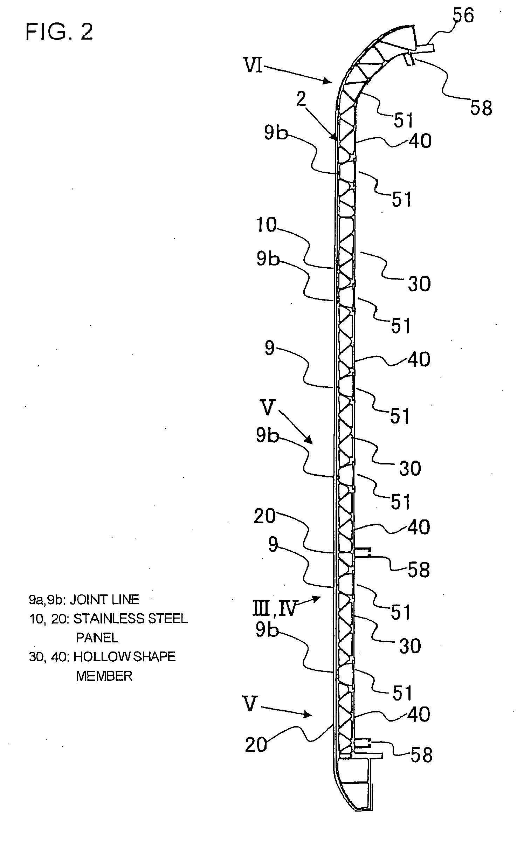

FIG. 2 is a view showing the vertical cross-section of the general portion of the side structure 2. Since the extruded hollow shape members 30 and 40 made of aluminum alloy are hollow shape members, the width of the hollow shape members are restricted by the performance of the press for extruding the aluminum alloy material, and in the present embodiments, seven hollow shape members 30, 40 are aligned and welded to form the side structure 2. However, the width of stainless steel panels 10 and 20 are not restricted, so the side structure can be formed by aligning two stainless steel panels.

Here, the extruded shape members 30 and 40 formed of aluminum alloy refer to extruded shape members formed of aluminum-based alloy.

Now, the steps for welding the extruded shape members 30 and 40 made of aluminum alloy and the method for welding the same to stainless steel panels 10 and 20 of the side structure 2 will be described.

Seven extruded shape members 30 and 40 made of aluminum alloy are aligned in parallel along the longitudinal direction of the car body 1, which are integrated via friction stir welding to form the side structure 2. The butted portions at width-direction ends of hollow shape members 30 and 40 are welded continuously via friction stir welding. Thereby, the hollow shape members 30 can constitute the outer surface of the car body, keeping water out. The hollow shape members 30 and 40 can also become frame members.

FIG. 3 illustrates the butted portion between the hollow shape members 30 and 40, wherein the butted portions are disposed at width-direction-ends of the hollow shape members 30 and 40. Stainless steel panels 10 and 20 are disposed on the outer side of the car of the hollow shape members 30 and 40 substantially in parallel with the hollow shape members 30 and 40, wherein one width-direction-end of one stainless steel panel 10 is butted against the width-direction-end of the other stainless steel panel 20. This butted portion is welded via friction stir welding to the butted portion between hollow shape members 30 and 40.

Friction stir welding is performed by inserting a rotary tool 200 for friction stir welding to the butted portion between hollow shape members 30 and 40 and to the butted portion between stainless steel panels 10 and 20, and moving the rotating rotary tool 20 with respect to the hollow shape members 30 and 40 and the stainless steel panels 10 and 20. It is also possible to move the hollow shape members 30 and 40 and the stainless steel panels 10 and 20 without moving the rotary tool 200. In other words, the hollow shape members 30 and 40 and the stainless steel panels 10 and 20 should be moved relatively with respect to the rotary tool 200.

The process for welding the hollow shape members 30 and 40 to the stainless steel panels 10 and 20 will now be described. First, the stainless steel panels 10 and 20 are mounted on a base 100, and the ends of members 10 and 20 are butted against each other. Thereafter, the hollow shape members 30 and 40 are mounted on top of the butted panels 10 and 20 from above, and the width-direction-ends of members 30 and 40 are butted against each other. The butted portion between stainless steel panels 10 and 20 and the butted portion between hollow shape members 30 and 40 are disposed substantially at the same position when seen from above. In other words, the butted portion between hollow shape members 30 and 40 is overlapped on the butted portion between stainless steel panels 10 and 20.

Hollow shape members 30 and 40 are composed of face plates 31 and 41 disposed on the inner side of the car, face plates 32 and 42 disposed on the outer side of the car substantially in parallel with the inner face plates, and ribs 33 and 43 connecting the face plates in a truss. The width-direction ends of the face plates 32 and 42 of hollow shape members 30 and 40 disposed on the outer side of the car are protruded than the ends of the face plates 31 and 41 disposed on the inner side of the car. In FIG. 3, the upper side corresponds to the inner side of the car, and the lower side corresponds to the outer side of the car.

Next, friction stir welding is performed from the upper side of the butted portion (from the side of the face plates 31 and 41 on the inner side of the car). A space allowing the rotary tool 200 for friction stir welding to be inserted is formed between one of the face plates 31 on the inner side of the car and the other face plate 41 on the inner side of the car. Through friction stir welding, the butted portion between outer face plates 32 and 42 is friction stir welded. In addition, the stainless steel panels 10 and 20 are friction stir welded at the butted portion.

In FIG. 4, a small-diameter portion 201 disposed at the leading end of the rotary tool 200 for friction stir welding is inserted to and passed through the outer face plates 32 and 42. The leading end thereof is dimensionally inserted to the butted portion between stainless steel panels 10 and 20, but the insertion quantity is very small (here, the insertion quantity to the butted portion of stainless steel panels 10 and 20 is approximately 0.5 mm). Therefore, after the welding operation, the plate thickness at the butted portion of the stainless steel panels 10 and 20 corresponding to the end of the small-diameter portion 201 is slightly reduced, so it is also possible to say that the small-diameter portion is not inserted. This state is referred to as "dimensionally inserted".

The hollow shape members 30 and 40 are friction stir welded since the outer face plates 32 and 42 of the hollow shape members 30 and 40 are friction stir welded by having the small-diameter portion 201 of the rotary tool inserted thereto. In addition, since the leading end of the small-diameter portion 201 is inserted to the stainless steel panels 10 and 20, the stainless steel panels 10 and 20 are friction stir welded to the face plates 32 and 42 on the outer side of the car (hereinafter referred to as outer face plates). This is considered to be realized by the outer face plates 32 and 42 being pressed hard against the stainless steel panels 10 and 20.

The friction stir welding performed to the outer face plates 32 and 42 and the stainless steel panels 10 and 20 is stack friction-stir-welding.

The friction stir welding of the stainless steel panels 10 and 20 to the outer face plates 32 and 42 is performed as follows. First, the rotating rotary tool 200 is inserted to the outer face plates 32 and 42 and moved to the longitudinal direction of friction stir welding, then the insertion depth of the rotary tool 200 is raised somewhat (for example, approximately 1.0 mm) and moved for approximately 50 mm in that state, during which movement of approximately 50 mm the friction stir welding is performed only to the outer face plates 32 and 42. It is irrelevant whether the friction stir welding is performed to the stainless steel panels 10 and 20 or not. After moving the tool for approximately 50 mm, the tool is inserted for approximately 1.0 mm and moved. As described, the friction stir welding between the stainless steel panels 10, 20 and the outer face plates 32, 42 is performed intermittently. The distance 1.0 mm mentioned above is the distance where the tool is no longer inserted to the stainless steel panels 10 and 20.

When the rotary tool 200 is elevated, the small-diameter portion 201 of the rotary tool 200 only performs friction stir welding of the outer face plates 32 and 42. It is irrelevant whether the friction stir welding is performed to the stainless steel panels 10 and 20 or not.

The ends of the butted portion of the outer face plates 32 and 42 are respectively provided with projections 32b and 42b protruding toward the inner side of the car. The width of the two projections 32b and 42b in total exceeds the diameter of a large-diameter portion 202 of the rotary tool 200. The aforementioned elevation quantity of the rotary tool 200 corresponds to the dimension in which the connection or boundary between the large-diameter portion 202 of the rotary tool 200 and the small-diameter portion 201 on the leading end thereof is not moved away from the upper end of the projections 32b and 42b. If the boundary is moved away from the upper end of the projections 32b and 42b, aluminum alloy may flow out, by which the friction stir welding is performed in a different condition compared to when the boundary is not moved away during friction stir welding of the outer face plates 32 and 42, so the boundary is not moved away in order to realize the same welding conditions.

For example, if the insertion quantity of the small-diameter portion 201 to the stainless steel panels 10 and 20 is approximately 0.5 mm as mentioned earlier, the tool is elevated for 0.5 mm or more and then inserted for 0.5 mm or more in an intermittent manner.

The plate thickness of the stainless steel panels 10 and 20 is approximately 1.0 mm.

According to this arrangement, the friction stir welding performed to the outer face plates 32 and 42 and the stainless steel panels 10 and 20 does not affect the outer surface thereof, and the appearance of the joint thereof is superior.

Since the welding of the outer face plates 32 and 42 and the welding of the stainless steel panels 10 and 20 is realized via friction stir welding, the welding temperature is low, causing little distortion.

Next, in FIGS. 3 and 4, the side facing the inner side of the car of the friction stir welded portion has an inner face plate 31 and an adjacent inner face plate 41 connected via a connecting member 51. Thus, the hollow shape members 30 and 40 constitute an integrated hollow shape member disposed in the width direction. The outer face plates 32 and 42 are protruded than the ends of inner face plates 31 and 41. The connecting member 51 is overlapped on the inner face plates 31 and 41, and then the overlapped portions (two portions) are subjected to friction stir welding F from above. Recessedportions are formed on the ends of the inner face plates 31 and 41 to form overlap portions, but they can be omitted. Further, the overlap portions can be welded via normal welding instead of friction stir welding. Reference F appears in FIGS. 3, 4, 5, 6, 8, 9, 12, 13 and 14.

The friction stir welding F of the connecting member 51 can be performed either continuously or intermittently along the longitudinal direction. It is possible to perform the friction stir welding of the outer face plates 32 and 42 continuously and to perform the friction stir welding of the inner face plates 31 and 41 and the stainless steel panels 10 and 20 intermittently.

We will now describe how the welding is performed "intermittently". The friction stir welding of the outer face plates 32 and 42 is performed via continuous friction stir welding, and the welding of the outer face plates 32 and 42 and the stainless steel panels 10 and 20 is performed via intermittent friction stir welding. "Intermittent" does not include friction stir welding performed in a spot-weld-like manner. Spot-weld-like friction stir welding refers to a friction stir welding method performed by inserting a rotating rotary tool, elevating the rotary tool 200 without moving the same so as to pull out the rotary tool 200 from the members 30 and 40 to be welded, moving the removed rotary tool 200, inserting the rotary tool into the panels 32 and 42 to be welded at a non-welded position, and performing friction stir welding. Thisspot-weld-likefriction stir welding can be considered as one example of an intermittent friction stir welding, but is excluded in the present embodiment.

In other words, intermittent friction stir welding refers to performing friction stir welding continuously, and then not performing friction stir welding continuously. "Intermittent" welding refers to performing "continuous" friction stir welding of the butted portion between outer face plates 32 and 42 and the butted portion between stainless steel panels 10 and 20, and then elevating the rotary tool 200 in the "intermittent area" in FIGS. 4, 5 and 6, so as to perform friction stir welding of only the butted portion between outer face plates 32 and 42.

When the rotary tool is elevated to perform friction stir welding of the outer face plates 32 and 42, the large-diameter portion 202 of the rotary tool 200 and the small-diameter portion 201 on the leading end thereof is elevated. When the rotary tool 200 is elevated, the small-diameter portion 201 no longer contacts the stainless steel panels 10 and 20, so that the rotary tool 200 performs friction stir welding of only the outer face plates 32 and 42. Even when the rotary tool 200 is elevated, the large-diameter portion 202 is positioned within the range of the projections 32b and 42b, and the boundary (connection) between the large-diameter portion 202 and the small-diameter portion 201 is not moved away from the upper end of the projections 32b and 42b.

This is because when the boundary between the large-diameter portion 202 and the small-diameter portion is pulled out from the upper end of the projections 32b and 42b and the boundary is removed from the upper end of the projections 32b and 42b, aluminum alloy material may flow out from the area, by which the conditions of friction stir welding with the boundary portion removed will differ from the conditions of friction stir welding with the boundary positioned within the projections.

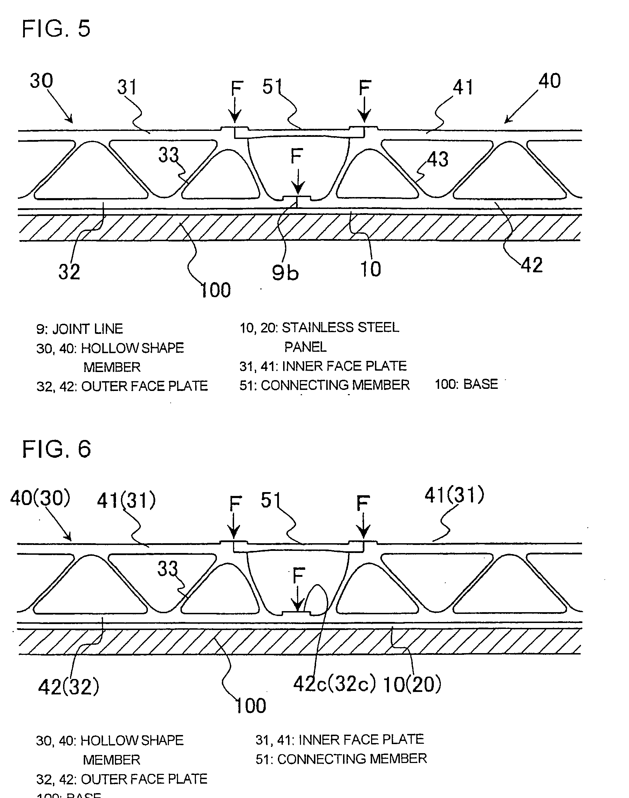

The definition of "intermittent" described above applies for the term appearing in the claims of the present invention. However, according to the embodiment illustrated in FIG. 6, only a singlehollowshapemember 40 (30) is overlapped on the stainless steel panel 10 (20), and there is no buttedportion between hollow shape members 30 and 40.

The thickness of outer face plates 32 and 42 near the projections 32b and 42b is thin, and the upper end of projections 32b and 42b is of equal plate thickness with that of the outer face plates 32 and 42 disposed below the inner face plates 31 and 41, but if the thickness of outer face plates 32 and 42 near the area where projections 32b and 42b are to be formed is thick, there is no need to provide projections 32b and 42b.

However, the projections 32b and 42b are effective to fill gaps that may be formed at the butted portion. Moreover, the outer face plates 32 and 42 may be scraped by the lower end of the large-diameter portion 202 of the rotary tool 200, by which the outer face plate may be locally thinned, but if projections 32b and 42b are provided, the outer faceplate will not be thinned, and the problems related to intensity will not occur.

FIG. 5 refers to the case in which a plurality of hollow shape members 30 and 40 are overlapped on a single stainless steel panel 10. The butted portion 9b between the hollow shape members 30 and 40 is friction stir welded from the side of the inner face plate 31 and 41, and thereafter, the connecting member 51 is overlapped and friction stir welded to the inner face plates 31 and 41.

### [Embodiment 2]

In FIG. 6, a single hollow shape member 30 (40) is overlapped on a single stainless steel panel 10 (20). A projection 32c (42c) projected toward the inner side of the car is formed on a desirable position corresponding to the butted portion between hollow shape members 30 and 40, which is friction stir welded to the stainless steel plate 10 (20). In other words, the width of the projection 32c (42c) is equal to thewidthof twoprojections 32b and 42b of embodiment 1. The projection 32c (42c) is welded via friction stir welding similarly as the aforementioned embodiment. The friction stir welding is performed either continuously or intermittently. The friction stir welding performed to weld stainless steel panels 10 (20) to hollow shape members 30 and 40 is stack friction stir welding.

There is no face plate 31 (41) on the inner side of the car surrounding the projection 32c (42c). This portion is formed as a single shape member portion in which only the outer face plate 32 (42) is disposed. The areas on both sides of the portion surrounding the projection 32c (42c) are formed as hollow shape members.

After performing friction stir welding of the projection 32c (42c), the space surrounding the projection 32c (42c) is covered with a connecting member 51, and the connecting member is welded to the inner face plates 31 and 41 via friction stir welding or normal welding.

FIG. 6 is an enlarged view of portion VI of FIG. 2. The present embodiment considers the deterioration of adhesion of the stainless steel panel and the hollow shape member when the size of the stainless steel panel 10 is large.

The area subjected to friction stir welding F is not composed of projections 32b and 42b, but is composed of a single projection 32c (42c). After performing friction stir welding F, the connecting member 51 is overlapped and welded. The width of the projection 42c (32c) is equal to the total width of the projections 32b and 42b.

### [Embodiment 3]

As illustrated in FIG. 2, the side structure 2 is formed via friction stir welding seven hollow shape members 30 and 40 together, wherein if the stainless steel panel 10 and 20 is composed of two panels, it is only necessary to form a single portion 9 where the hollow shape members 30 and 40 is friction stir welded to the stainless steel panels 10 and 20. The width of one hollow shape member 30 (40) can be approximately 40 to 50 cm.

The above arrangement has a drawback in that the distance from the joint line 9 to the upper and lower ends of the side structure 2 becomes too large, deteriorating the adhesion between the hollow shape members 30 and 40 and the stainless steel panels 10 and 20 (wherein the stainless steel panels 10 and 20 are adhered to the hollow shape members 30 and 40), and also deteriorating the appearance.

Furthermore, it is also considered that the adhesiveness at the curved portion shown by reference V of FIG. 2 is not good. In order to overcome this problem, the friction stir welding should be performed as illustrated in FIG. 6.

### [Embodiment 4]

The friction stir welding of the stainless steel panel 10 (20) and the projections 32b, 42b, 32c (42c) is performed intermittently. When there are multiple lines 9 of friction stir welding, it is desirable that a continuously friction stir welded region of one of the friction stir welding lines is formed in a region corresponding to the area in the direction orthogonal to the longitudinal direction of the region in which an adjacent friction stir welding line forms the intermittent region, where no friction stir welding is performed. According to this arrangement, it is possible to consider that the whole body is welded continuously.

### [Embodiment 5]

The aforementioned embodiments were described using hollow shape members, but it is possible to use single shape members composed of only outer face plates.

### [Embodiment 6]

According to the aforementioned embodiments, the ends of hollow shape members are butted against one another and the butted portion is subjected to friction stir welding, but it is also possible to overlap the ends and to subject the overlapped area to friction stir welding. In addition, the projection can be disposed at the overlapped portion. The projection is required to be provided at only one of the face plates at the overlapped portion.

### [Embodiment 7]

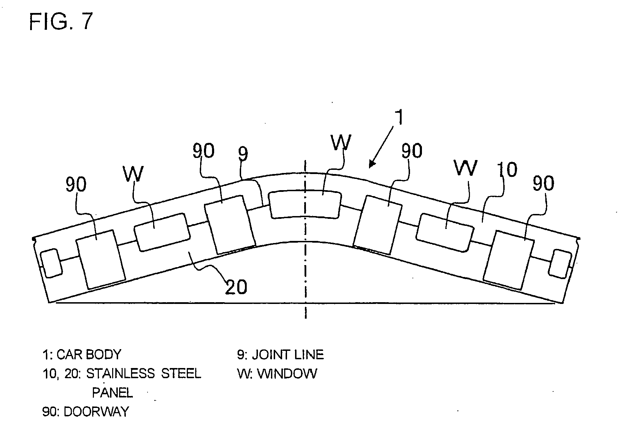

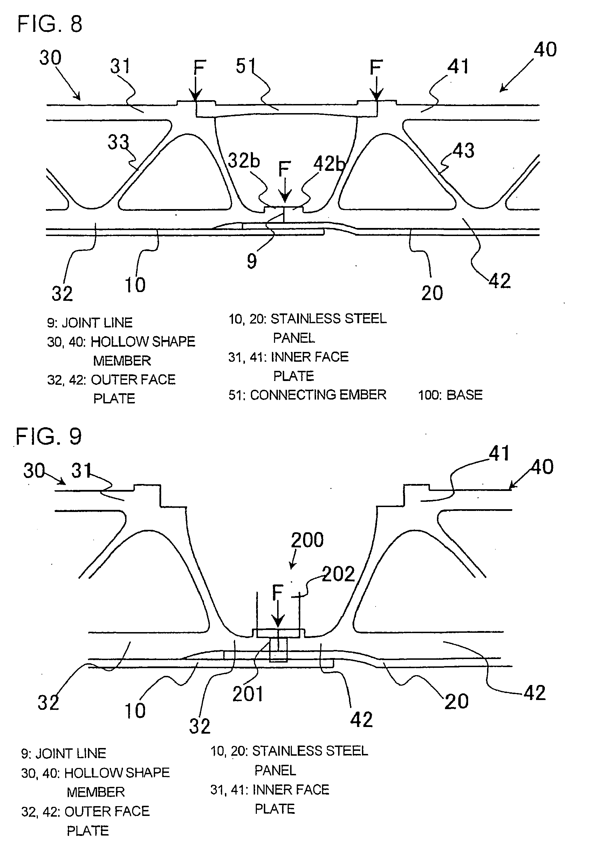

According to the aforementioned embodiments, the butted portion of stainless steel panels 10 and 20 is overlapped with the butted portion of the outer face plates, but since the side structure 2 includes a camber, it is considered difficult to have the stainless steel panels 10 and 20 butted against one another in correspondence with the camber. The following embodiment is aimed at overcoming this problem. The present embodiment will be described with reference to FIGS. 7 and 8.

At first, we will describe the camber. FIG. 7 is a side view of a car body 1 with a camber. The longitudinal center portion of the car body 1 is set higher by the camber for approximately 20 mm. At first, the hollow shape members 30 and 40 are welded with the camber being formed. In order to provide the camber, the plurality of hollow shape members 30 and 40 mounted on a base 100 are pressed from the lateral direction which is orthogonal to the longitudinal direction of the members so as to create a camber, and then the butted portions are subjected to friction stir welding.

The plurality of hollow shape members 30 and 40 are aligned with their direction of extrusion (longitudinal direction) corresponding to the longitudinal direction of the car body. The camber can be created by pushing the members from the horizontal direction orthogonal to the direction of extrusion. While creating the camber, the hollow shape members are subj ected to friction stir welding along the camber. The camber is provided so as to prevent the center portion of the car body 1 from sagging by the weight of crew and passengers.

There is no camber provided on the stainless steel panels 10 and 20. However, it is considered desirable to cut the upper end of the uppermost portion of the stainless steel panel constituting the car body 1 so that it presents the same circular arc with the camber. FIG. 7 shows the camber in an exaggerated manner.

In FIG. 8, the ends of the stainless steel panels 10 and 20 are overlapped one above the other. The overlap space is approximately 50 mm, which is greater than the size of the camber which is approximately 20 mm. If an overlap space of 50 mm is provided, the butted portion of outer face plates 32 and 42 can be subjected to friction stir welding along the camber even if the butted portion is somewhat displaced. The friction stir welding is performed along the camber, but since the stainless steel panels 10 and 20 are overlapped, the friction stir welding can be performed along the camber even if the stainless steel panels 10 and 20 do not have a camber.

After subjecting the butted portion between the outer face plates 32 and 42 and the overlap portion between the stainless steel panels 10 and 20 to friction stir welding, a joining member is overlapped on the inner face plates 31 and 41, which is welded thereto via friction stir welding or normal welding.

### [Embodiment 8]

FIG. 9 is an enlarged cross-sectional view of the friction stir weld portion between the hollow shape members 30 and 40 and the stainless steel panels 10 and 20. The rotary tool 200 for friction stir welding passes through the upper stainless steel panel 20 and is slightly inserted to the lower stainless steel panel 10. For example, the insertion quantity is approximately 0.5 mm. However, this is a supposition image of the state prior to friction stir welding. After welding, the thickness of the stainless steel panel 10 corresponding to the leading end of the small-diameter portion 201 is slightly reduced, and it may be possible to say that the rotary tool 200 is not really inserted to the stainless steel panel 10. Therefore, the friction stir welding does not affect the exterior side of the stainless steel panel 10, and the joint has a superior appearance.

The upper stainless steel panel 20 is welded to the outer face panels 32 and 42 via stack friction-stir-welding. The lower stainless steel panel 10 is welded to the upper stainless steel panel 20 via stack friction-stir-welding.

As described, the quantity of insertion of the rotary tool 200 to the stainless steel panel 10 is very small (approximately 0.5 mm), according to which the thickness of the stainless steel panel 10 to which the rotary tool 200 is inserted is slightly reduced, and it may be possible to say that the rotary tool 200 is not really inserted to the stainless steel panel 10.

The friction stir welding of the stainless steel panels 10 and 20 to the outer face plates 32 and 42 is performed by intermittently raising the depth of insertion of the rotary tool upward as according to the aforementioned embodiment.

### [Embodiment 9]

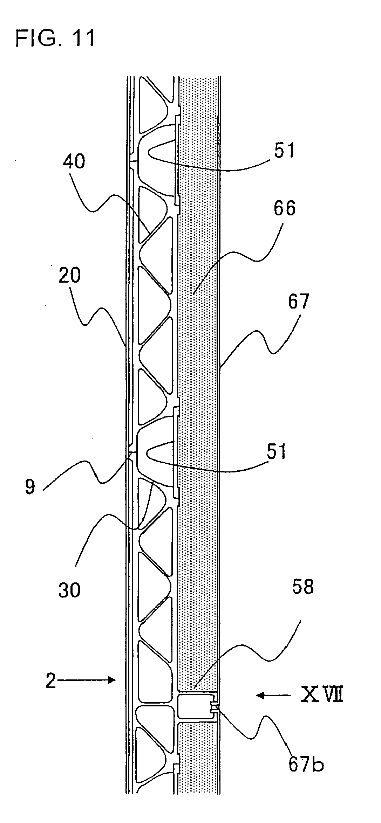

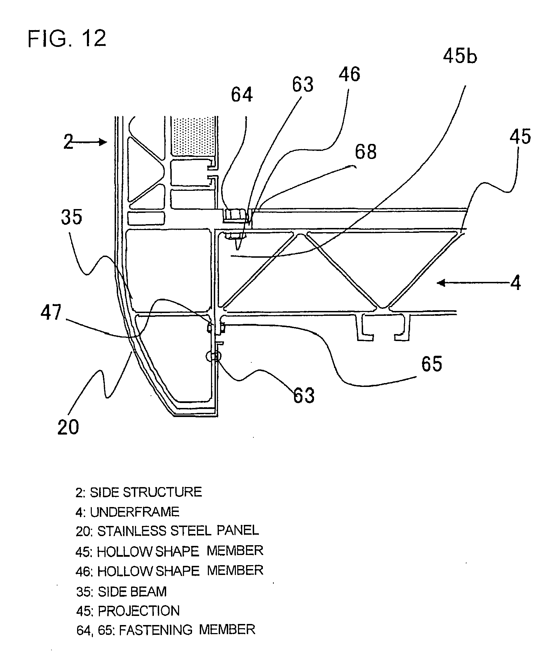

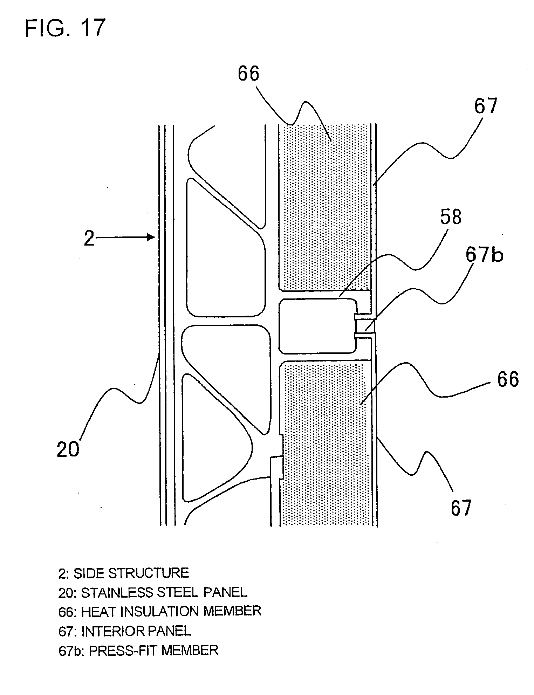

Now, the connection for connecting the side structures 2, the roof structure 3 and the underframe 4 of the railway car formed as described above will be described with reference to FIGS. 10 through 12. FIG. 11 shows the side structure 2 disposed between FIG. 10 and FIG. 12. The connection is normally realized via welding or friction stir welding, but since the welding area is composed of an aluminum alloy and a stainless steel panel, welding thereof is considered difficult, and in the present embodiment, fastening members 61 such as rivets, bolts and nuts or Huckbolts (Huckbolt: trade name) are used. FIG. 17 is an enlarged view of portion XVII of FIG. 11.

FIG. 10 shows the connection for connecting the side structure 2 and the roof structure 3. The stainless steel panel 10 on the outer side of the side structure 2 is folded back at the upper end of the side structure 2, and fastened via screws 62 to a vertical surface on the inner side of the car of the hollow shape member 40 from the lateral direction (from the center side in the width direction of the car body 1 or inner side of the car). Further, there is a projection 46 formed on the hollow shape member 40 at the upper end of the side structure 2 that protrudes toward the roof structure 3, and a projection 47 formed on a hollow shape member 54 at the width-direction end of the roof structure 3 is overlapped on the projection 46 from above. The projection 47 can be overlapped on the projection 46 by lowering the roof structure 3 from above onto the side structure 2 fixed on the underframe. A fastening member 61 is used to fasten the overlapped portion from above. The fastening member 61 is a Huckbolt (Huckbolt: trade name). The Huckbolt 61 can be fastened by merely engaging the same from the insertion side. An adhesive is applied on the contact portion between the side structure 2 and the roof structure 3.

The portion of the roof structure 3 close to where the fastening member 61 is mounted is recessed. The recess 32 constitutes a gutter 32 for water. The width-direction center portion of the car body is disposed higher. On the longitudinal end of the car body is disposed a connecting pipe (not shown) for conducting the water in the gutter downward. The connecting pipe has one end opened on the bottom surface of the gutter 32. The end structure 5 covers the roof structure 3 and the gutter 32. The width-direction center of the roof structure 3 is protruded upward.

The upper end of the fastening member 61 is disposed substantially in plane with the upper surface of the projection 57 of the hollow shape member 54. The lower end thereof is disposed substantially in plane with the lower surface of the projection 46 of the hollow shape member 40.

FIG. 12 illustrates the connection between the side structure 2 and the underframe 4. A hollow shape member 35 disposed at the lower portion of the side structure 2 has a large plate thickness and high rigidity. The lower end of the stainless steel panel 20 is folded toward the inner side of the car (in this case, inner side of the car means the center side in the width direction of the car body 1, and not necessarily the interior of the car) at the lower portion, and fixed via a screw 63 to a perpendicular surface at the inner side of the car of the hollow shape member 45.

The hollow shape member 35 has a projection 46 protruded toward the hollow shape member 45 of the underframe 4, and the projection 46 is overlapped on the upper surface of the hollow shape member 45 of the underframe 4. A fastening member 64 is used to fasten the overlapped portion from above.

Moreover, a projection 47 protrudes downward from the hollow shape member 45 of the underframe 4 and the vertical surface facing the underframe 4 of the hollow shape member 35, and a fastening member 65 is used to engage the projection 47 to the vertical surface of the hollow shape member 35 in the lateral direction from the inner side of the car. The perpendicular hole for inserting the fastening member 65 is provided at a predetermined portion in consideration of the camber. There is a spacer disposed between the projection 46 and the hollow shape member 45.

The fastening members 64 and 65 are the same as the fastening member 61.

In the above embodiment, the projection 46 protruding in the horizontal direction is provided integrally with the hollow shape member 35 of the side structure 2, but it is also possible to provide a projection on the hollow shape member 45 to be disposed along the vertical surface on the inner side of the hollow shape member of the side structure 2. According to this arrangement, there is no need for a spacer.

The upper end of the fastening member 64 fastened from above is lower than the upper surface of a floor panel 68 constituting the cabin, and is not protruded upward. The floor panel 68 covers the upper portion of the fastening member 64.

The stainless steel panels 10 and 20 are folded at upper and lower ends of the side structure 2 so as to cover the hollow shape members 40 and 35. The upper and lower ends can be folded before being connected to the hollow shape members 40 and 35. Clearances of approximately 50 mm corresponding to the size of the camber are formed between the upper and lower ends of the hollow shape members 40 and 35 and the upper and lower ends of the stainless steel panels 10 and 20.

The clearance between the upper end of the hollow shape member 40 and the upper end of the stainless steel panel 10 at the upper end of the side structure 2 is small. The clearance is enlarged when the passengers are on board the car and the camber of the car body 1 becomes smaller. Therefore, it is actually not necessary to provide a clearance at the upper end of the side structure.

The clearance between the lower end of the hollow shape member 35 and the lower end of the stainless steel panel 20 at the lower end of the side structure 2 is large. The clearance becomes smaller when the passengers are on board the car and the camber of the car becomes smaller.

Therefore, the stainless steel panels 10 and 20 have long holes (not shown) allowing the screws 62 and 63 to move.

Since the stainless steel panels 10 and 20 are fixed to the hollow shape members 55 and 45 via screws 62 and 63, the panels will not be separated from the members.

It is possible to arrange the stainless steel panels 10 and 20 folded in advance in the clearance between the stainless steel panels 10 and 20 and the upper and lower ends of the hollow shape members 55 and 45, where the panels are attached to the hollow shape members 30 and 40 via friction stir welding. In another example, the stainless steel panels 10 and 20 are attached via friction stir welding, and then the panels 10 and 20 are held and folded via rollers. Thereafter, the panels 10 and 20 are fixed via screws 62 and 63.

Since the engagement of the hollow shape member 35 of the side structure 2 and the hollow shape member 45 of the underframe 4 from above via the fastening member 63 is performed by inserting the fastening member 64 to a hollow area 45b of the hollow shape member 45 of the underframe 4, there is no need to provide a dedicated space for engagement.

Other than the engagement for engaging the underframe 4, the side structure 2 and the roof structure 3 via fastening members 61 and 63 as described above, equipments such as rugs on the floor on the upper surface of the underframe 4, passenger seats, lavatories, underfloor cables and air pipes are disposed on the underframe 4. In addition, heat insulating members 66 and interior decorating panels 67 are disposed on the side structure 2. In addition, lighting equipments, luggage racks, air conditioning ducts, heat insulating members 66 and interior panels 67 are disposed on the ceiling of the roof structure 3. Furthermore, a control equipment (not shown) is installed in the end structure 5. After installing the equipments described above, the underframe 4, the side structure 2, the roof structure 3 and the end structure 5 are fixed to form the car body 1.

Though it is possible to connect the side structure 2 and the roof structure 3 at the side surface of the car body 1 and the roof structure 3 instead of at the portion illustrated in FIG. 10, according to such arrangement, the fastening member becomes visible at the side surface of the side structure and a cover must be provided, by which the costs are increased. According to the arrangement of the present embodiment, the engagement can be realized inexpensively.

Similarly, the connection between the side structure 2 and the underframe 4 can be realized by engaging the underframe 4 with the side surface of the side structure 2 above the underframe 4. However, since according to the present embodiment, the side structure 2 is overlapped from above to the underframe 4, the engagement canbe realizedat a lower cost than when the engagement is performed at the side surface.

In FIG. 17, heat insulating members 66 are disposed on the inner side of the car of the side structure 2 and the roof structure 3. The heat insulating members 66 are fixed to hollow shape members 30, 40 and 54 or the interior panels 67 via an adhesive or the like. The interior panels 67 are fixed to rails 57 and 58 disposed on the hollow shape members 30, 40 and 54 of the side structure 2 or the roof structure 3. The rails 57 and 58 are formed integrally with the hollow shape members 30 and 40 of the side structure 2 via extrusion molding along the longitudinal direction of the car body, wherein a recess (hereinafter called groove) is formed at the end toward the inner side of the car, and the ends of the interior panels 67 are folded and inserted to the groove. If a clearance is formed between the two interior panels 67 and 67 inserted to the groove, the interior panels 67 will be loose, so a press-fit member 67b is inserted between the two interior panels 67 and 67 so as to fix the panels. The press-fit member 67b is, for example, a rubber member, but it can be formed of any material.

According to the present arrangement, screws are not necessary to fix the interior panels, and thus the costs thereof can be cut down.

In the present arrangement, the ends of two interior panels 67 are inserted to a single groove, but if only a single interior panel 67 is disposed, such as under the window W, the end of one interior panel 67 is inserted to the groove and the press-fit member 67b is press-fit between the interior panel 67 and the rails 57 and 58.

The term "circumferential" in the present claims (claim 81) refers to the circumferential direction of the car body 1. If only the side structure is involved, the direction can be referred to as the vertical direction, but if the roof structure is also involved, the direction cannot be referred to as vertical, so the term "circumferential" is used.

### [Embodiment 10]

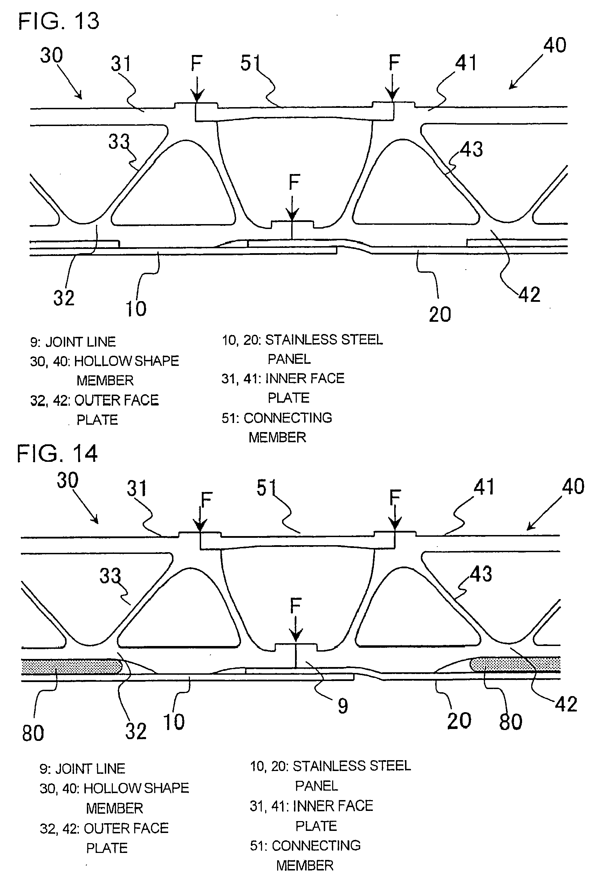

In FIG. 13, the butted portion between the outer face plates 32 and 42 is recessed toward the inner side of the car substantially corresponding to the plate thickness of the stainless steel panel 20, which is 1 mm. The width of the recess or width in the lateral direction of FIG. 13 is wider than the overlap space of the stainless steel panels 10 and 20.

In FIG. 13, if the stainless steel panels 10 and 20 are subjected to stack welding, the area excluding the area near the joint portion is also recessed in order to reduce the weight of the extruded shape members 30 and 40 made of aluminum alloy.

### [Embodiment 11]

In FIG. 14, heat insulating members 80 are disposed between the outer face plates 32 and 42 and the stainless steel panels 10 and 20 excluding the friction-stir-weld joint area. Hollow shape members 30 and 40 having heat insulating members 80 disposed thereon are mounted on the stainless steel panels 10 and 20, and then the members are attached via friction stir welding. The friction stir welding is performed to join both the hollow shape members 30 and 40 and the stainless steel panels 10 and 20. Any material can be used as the heat insulating member 80, but a vacuum insulation material is preferable since it can be minimized in thickness. The heat insulating member 80 is attached to the hollow shape members 30 and 40 in advance via an adhesive. Since the heat caused by friction stir welding is lower than the heat caused by normal welding, the influence on the insulating member 80 is small.

It is also possible to merely form an air space between the outer face plates 32 and 42 and the stainless steel panels 10 and 20, instead of disposing the heat insulating member 80.

### [Embodiment 12]

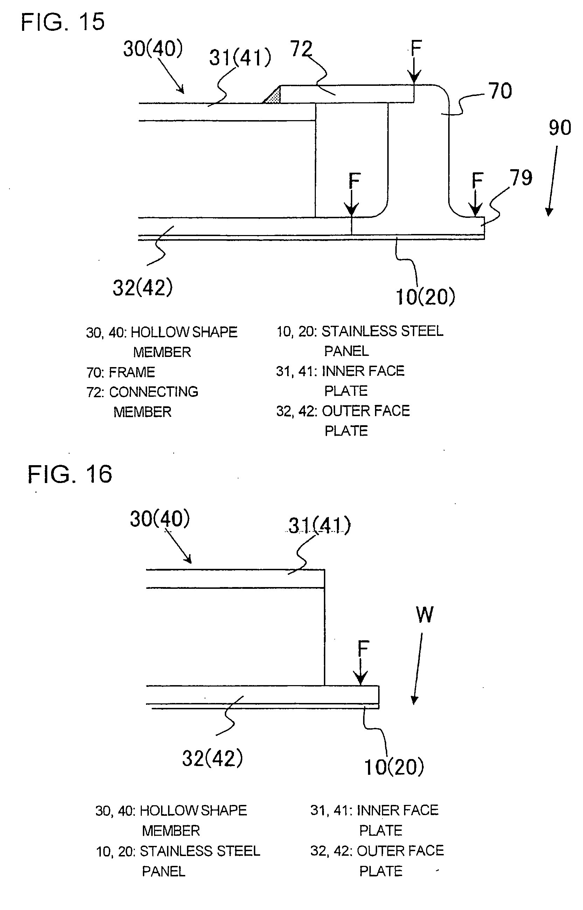

Now, the welding of a frame of a doorway 90 will be described with reference to FIG. 15. The frame 70 is formed by bending an extruded hollow shape member constituting the frame into a U-shape, and welding the lower ends of the U-shaped member onto the underframe 4.

The frame 70 is butted against the outer face plates 32 and 42 of the hollow shape members 30 and 40, then the butted portion with the outer face plates 32 and 42 are attached via friction stir welding, and thereafter, the inner side of the frame 70 and the inner face plates 31 and 42 are attached via normal welding or friction stir welding.

Furthermore, a projection 79 protruding toward the doorway 90 on the frame 70, the hollow shape member 30 (40) and the stainless steel panel 10 (20) are welded from above via friction stir welding. This friction stir welding is performed either intermittently or continuously. Since the thickness of the projection 79 is small, friction stir welding can be performed easily.

As described above, the side structure 2, the roof structure 3 and the end structure 5 are mounted on the underframe 4 after installing various apparatuses (equipments) on the side structure 2, the roof structure 3, the underframe 4 and the end structure 5.

### [Embodiment 13]

According to the aforementioned embodiments, stainless steel panels 10 and 20 are disposed on the outer side of the hollow shape members 30 and 40 of the side structure 2, but even if there are no stainless steel panels 10 and 20, the car body 1 can be formed via fastening members 61 and 63. The main object of the present embodiment is to compose a rear car body on which equipments are installed.

### [Embodiment 14]

FIG. 16 shows how the circumference of the opening of a window W is joined. The side end portion of window W on the outer face plate 32 (42) of the hollow shape member 30 (40) and the stainless steel panel 10 (20) are joined via friction stir welding.

### [Embodiment 15]

According to the embodiment of FIG. 2, the side structure is formed by friction stir welding stainless steel panels 10 and 20 on multiple hollow shape members 30 and 40. The stainless steel panels 10 and 20 arranged in parallel with the hollow shape members 30 and 40 are expanded with respect to the hollow shape members 30 and 40. This is considered to be caused by the heating during friction stir welding, since the shrinkage of the two friction stir welded portions of the hollow shape members 30 and 40 is greater than the shrinkage of the stainless steel panels.

In order to overcome this problem, friction stir welding is performed while heating the stainless steel panels 10 and 20, for example to 100 °C, so as to expand the panels 10 and 20. The stainless steel panels 10 and 20 can be mounted on a heated base 100 to perform full-surface heating, or the stainless steel panels 10 and 20 heated in advance can be mounted on the base 100. It is preferable to heat the panels to approximately 150 °C considering room temperature. The temperature of the stainless steel panels 10 and 20 relates to the heat yield and the distance between two friction stir weld joints.

The heating is performed by installing a heater on the base 100 and heating either the whole surface of the stainless steel panels 10 and 20 or the relevant portions thereof.

According to the above process, friction stir welding is performed while the stainless steel panels 10 and 20 are heated to high temperature, so that the shrinkage of the hollow shape members 30 and 40 can be absorbed when they are cooled to normal temperature.

Furthermore, even when the longitudinal ends of the hollow shape members 30 and 40 are welded via friction stir welding, the expansion can be absorbed.

### [Embodiment 16]

Furthermore, the whole surface or the friction-stir-welded portion of the hollow shape members 30 and 40 is cooled before friction stir welding the shrunk stainless steel panels 10 and 20, by which the temperature rise caused by friction stir welding is prevented. Friction stir welding is performed at both ends in the width direction of the hollow shape members 30 and 40.

### [Embodiment 17]

Instead of heating the stainless steel panels 10 and 20, it is possible to heat the hollow shape members 30 and 40 (or to cool the same) while performing friction stir welding. The cooling is performed by utilizing water or coolant. The water or coolant is poured onto the friction stir weld area. In another example, air is blown to the friction stir weld area. The cooling can be performed to cool the whole surface of the hollow shape members 30 and 40 from the side where the rotary tool is inserted, or from the opposite side from where the rotary tool is inserted, by supplying cooling water, coolant or air to the space.

### [Embodiment 18]

Instead of heating the stainless steel panels or cooling the hollow shape members, the following method can be applied. Stainless steel panels 10 and 20 having projected beads protruding toward the outer side of the car along the longitudinal direction of the hollow shape member are welded via friction stir welding between both width-direction-ends of the stainless steel panels 10 and 20. In this case, it is not necessary to restrict the position of the beads when placing the stainless steel panels 10 and 20 on the base 100.

The beads are projected in an arc. The beads projected in an arc and the stainless steel panels 10 and 20 are connected in an arc. The arc exists at the connection between the planar stainless steel panels and the projected arc.

According to this arrangement, the stainless steel panels will not shrink, but the beads function to accumulate the expansion of the stainless steel panels to the beads and to prevent the expansion from becoming visible.

### [Embodiment 19]

The aforementioned embodiments are described with respect to a car body, but the present invention can be applied to other fields of use in which it is desirable to weld stainless steel panels to extruded hollow shape members composed of aluminum alloy. The possible fields of use include, for example, a wall member of a kitchen or a kitchen counter of a kitchen.

Further aspects of the present invention relating to the method for manufacturing a structure, the structure, the friction welding apparatus and the railway vehicle are realized respectively as follows:
1. A method for manufacturing a structure comprising:
   overlapping one or a plurality of extruded shape members made of aluminum alloy on a stainless steel panel; and
      - friction stir welding either a butted portion or an overlapped portion between extruded shape members made of aluminum alloy, and friction stir welding the butted portion or the overlapped portion to the stainless steel panel, wherein the friction stir welding is performed intermittently along a longitudinal direction of the friction stir welding.
2. The method for manufacturing a structure according to the aforementioned 1, wherein
   a plurality of friction stir welding lines are formed by friction stir welding the extruded shape members made of aluminum alloy and the stainless steel panel; and
   the friction stir welding is performed intermittently so that a continuously friction stir welded region of one of the plurality of friction stir welding lines is formed in a region corresponding to the region in which an adjacent friction stir welding line is discontinued.
3. The method for manufacturing a structure according to the aforementioned 1, wherein
   a projection protruded toward an inner side of the structure is formed to the extruded shape member made of aluminum alloy at a portion where the extruded shape member made of aluminum alloy is friction stir welded to the stainless steel panel; and
   the projection is friction stir welded to the extruded shape members made of aluminum alloy and also friction stir welded to the stainless steel panel.
4. The method for manufacturing a structure according to the aforementioned 1, wherein
   a projection protruded toward an inner side of the structure is formed at a portion where the extruded shape member made of aluminum alloy and the stainless steel panel are friction stir welded; and
   the projection is friction stir welded to the extruded shape members made of aluminum alloy, and also friction stir welded intermittently to the stainless steel panel, wherein upon performing the two friction stir welding processes, a boundary between a large-diameter portion of a rotary tool and a small-diameter portion formed to a leading end thereof for performing friction stir welding is positioned within the projection during the friction stir welding.
5. A method for manufacturing a structure, comprising:
   overlapping an extruded shape member made of aluminum alloy on a stainless steel panel;
   friction stir welding the stainless steel panel and the extruded shape member made of aluminum alloy,
   wherein the friction stir welding is performed intermittently along a longitudinal direction of the friction stir welding.
6. The method for manufacturing a structure according to the aforementioned 5, wherein
   the extruded shape member made of aluminum alloy is composed of a single shape member portion having no face plate on an inner side of the structure, and a hollow shape member portion disposed on both width-direction sides of the single shape member portion and having a face plate on the inner side of the structure; and
   a face plate on an outer side of the structure of the single shape member portion is friction stir welded to the stainless steel panel.
7. The method for manufacturing a structure according to the aforementioned 5, wherein
   the extruded shape member made of aluminum alloy is composed of a single shape member portion having no face plate on an inner side of the structure, and a hollow shape member portion disposed on both width-direction sides of the single shape member portion and having a face plate on the inner side of the structure;
   a projection protruded toward an inner side of the structure is formed on an inner side of a face plate on an outer side of the structure in the single shape member portion; and
   the projection is friction stir welded to the stainless steel panel.
8. The method for manufacturing a structure according to the aforementioned 5, wherein
   the extruded shape member made of aluminum alloy is composed of a single shape member portion having no face plate on an inner side of the structure, and a hollow shape member portion disposed on both width-direction sides of the single shape member portion and having a face plate on the inner side of the structure;
   a projection protruded toward an inner side of the structure is formed on a face plate on an outer side of the structure in the single shape member portion; and
   the projection is friction stir welded intermittently to the stainless steel panel.
9. The method for manufacturing a structure according to the aforementioned 5, wherein
   the extruded hollow shape member made of aluminum alloy is composed of a single shape member portion having no face plate on an inner side of the structure, and a hollow shape member portion disposed on both width-direction sides of the single shape member portion and having a face plate on the inner side of the structure;
   a projection protruded toward an inner side of the structure is formed on an inner side of a face plate on an outer side of the structure in the single shape member portion;
   a width of an end surface of the inner side of the projection is greater than a large-diameter portion of a rotary tool for friction stir welding; and
   friction stir welding is performed in this state.
10. The method for manufacturing a structure according to the aforementioned 5, wherein
   the extruded shape member made of aluminum alloy is composed of a single shape member portion having no face plate on an inner side of the structure, and a hollow shape member portion disposed on both width-direction sides of the single shape member portion and having a face plate on the inner side of the structure;
   a face plate on an outer side of the structure in the single shape member portion is friction stir welded to the stainless steel panel; and
   thereafter, an inner face plate of the hollow shape member portion at a periphery of the friction stir welded portion is connected via a connecting member with the inner face plate of the adjacent hollow shape member portion.
11. A method for manufacturing a structure comprising:
   overlapping a first extruded shape member made of aluminum alloy and a second extruded shape member made of aluminum alloy on a stainless steel panel; and
   friction stir welding either a butted portion or an overlapped portion between the first extruded shape member and the second extruded shape member made of aluminum alloy to the stainless steel panel.
12. The method for manufacturing a structure according to the aforementioned 11, wherein
   the friction stir welding of the butted portion or the overlapped portion to the stainless steel panel is performed intermittently along a longitudinal direction of the friction stir welding.
13. A method for manufacturing a structure comprising:
   butting or overlapping a width-direction end of a first stainless steel panel with a width-direction end of a second stainless steel panel;
   overlapping a first extruded shape member made of aluminum alloy on the first stainless steel panel and overlapping a second extruded shape member made of aluminum alloy on the second stainless steel panel;
   butting or overlapping a width-direction end of the first extruded shape member made of aluminum alloy with a width-direction end of the second extruded shape member made of aluminum alloy;
   arranging the butted or overlapped portion of the extruded shape members made of aluminum alloy and the butted or overlapped portion of the stainless steel panels to be positioned substantially at a same position with respect to a right angle of the direction of extrusion of the extruded shape members made of aluminum alloy; and
   friction stir welding the butted portion or the overlapped portion of the extruded shape members made of aluminum alloy to the butted or overlappedportion of the stainless steel panels.
14. The method for manufacturing a structure according to the aforementioned 13, wherein
   the butted portion or the overlapped portion of the extruded shape members made of aluminum alloy and the butted portion or the overlapped portion of the stainless steel panels are friction stir welded intermittently along a longitudinal direction of friction stir welding.
15. The method for manufacturing a structure according to the aforementioned 13, wherein
   a plurality of sets of extruded shape members are arranged, each set composed of the first and second extruded shape members made of aluminum alloy,
   one or a plurality of sets of stainless steel panels are arranged, each set composed of the first and second stainless steel panels;
   a plurality of friction stir welding lines between the extruded shape members made of aluminum alloy or between the extruded shape member made of aluminum alloy and the stainless steel panel are formed in a direction orthogonal to the direction of the friction stir welding; and
   the friction stir welding is performed so that a continuously friction-stir-welded region between extruded shape members of aluminum alloy orthogonal to the longitudinal direction of the friction stir welding is formed in a region corresponding to the region in which the extruded shape member made of aluminum alloy and the stainless steel panel are not friction stir welded along a longitudinal direction of the friction stir welded line substantially adjacent and parallel thereto.
16. The method for manufacturing a structure according to the aforementioned 13, wherein
   the butted portions of the first and second extruded shape members made of aluminum alloy have projections protruded toward an inner side of the structure, or the overlapped portion has a projection protruded toward an inner side of the structure; and
   the projections of the extruded shape members made of aluminum alloy or the projection on the overlapped portion is friction stir welded to the extruded shape members made of aluminum alloy, and in addition, the projection is friction stir welded to the stainless steel panel.
17. The method for manufacturing a structure according to the aforementioned 13, wherein
   the butted portions of the first and second extruded shape members made of aluminum alloy have projections protruded toward an inner side of the structure, or the overlapped portion has a projection protruded toward an inner side of the structure; and
   the projections of the extruded shape members made of aluminum alloy or the projection on the overlapped portion is friction stir welded continuously to the extruded shape members made of aluminum alloy with respect to a longitudinal direction of the friction stir welding, and in addition, the projection is friction stir welded intermittently to the stainless steel panel with respect to the longitudinal direction.
18. The method for manufacturing a structure according to the aforementioned 13, wherein
   the butted portions of the first and second extruded shape members made of aluminum alloy have projections protruded toward an inner side of the structure, or the overlapped portion has a projection protruded toward an inner side of the structure;
   the projections of the extruded shape members made of aluminum alloy or the projection on the overlapped portion is friction stir welded continuously to the extruded shape members made of aluminum alloy with respect to a longitudinal direction of the friction stir welding, and in addition, the projection is friction stir welded intermittently to the stainless steel panel with respect to the longitudinal direction; and
   the continuous friction stir welding and the intermittent friction stir welding are performed by positioning a boundary between a large-diameter portion of a rotary tool for performing friction stir welding and a small-diameter portion disposed on a leading end thereof within the projection in a direction of insertion of the rotary tool.
19. The method for manufacturing a structure according to the aforementioned 13, wherein
   the butted portions or the overlapped portions of the first extruded shape member and the second extruded shape member made of aluminum alloy are friction stir welded; and
   thereafter, an inner face plate of the first extruded shape member made of aluminum alloy and an inner face plate of the second extruded shape member made of aluminum alloy at both width-direction sides of the friction stir welded portion are connected via a connecting plate.
20. A method for manufacturing a structure comprising:
   overlapping at least two extruded shape members made of aluminum alloy on a stainless steel panel;
   butting or overlapping a width-direction end of a first extruded shape member made of aluminum alloy with a width-direction end of a second extruded shape member made of aluminum alloy of the two extruded shape members;
   arranging a plurality of sets of extruded shape members, each set composed of the first and second extruded shape members made of aluminum alloy;
   if the stainless steel panel is composed of a single panel, arranging the butted portion or the overlapped portion of the extruded shape members made of aluminum alloy within the single panel, and if the stainless steel panel is composed of a plurality of panels, butting or overlapping a width-direction end of one stainless steel panel with that of the other panel;
   performing friction stir welding continuously to weld the butted portion or the overlapped portion of the extruded shape members made of aluminum alloy along a longitudinal direction of friction stir welding; and
   performing friction stir welding intermittently to weld the extruded shape members made of aluminum alloy to the butted portion or the overlapped portion of the stainless steel panel along the longitudinal direction of friction stir welding.
21. The method for manufacturing a structure according to the aforementioned 20, wherein
   a region where the continuous friction stir welding is performed corresponds to the region where friction stir welding is not performed in an adjacent friction stir welding line parallel in a direction orthogonal to a longitudinal direction of the continuous friction stir welding.
22. A method for manufacturing a structure comprising:
   overlapping a first extruded shape member made of aluminum alloy and a second extruded shape member made of aluminum alloy on a stainless steel panel;
   butting or overlapping a width-direction end of the first extruded shape member made of aluminum alloy with a width-direction end of the second extruded shape member made of aluminum alloy;
   friction stir welding the first and second extruded shape members made of aluminum alloy and also friction stir welding the same to the stainless steel panel; and
   forming a side structure of a car body by arranging the stainless steel panel on an outer side than the first and second extruded shape members made of aluminum alloy.
23. The method for manufacturing a structure according to the aforementioned 22, wherein
   the stainless steel panel arranged at an upper end or a lower end of the side structure is folded back so as to cover an inner vertical plane at an upper end or a lower end of the first or second extruded shape member made of aluminum alloy;
   the folded-back stainless steel panel is arranged on the first or second extruded shape member made of aluminum alloy; and
   the first extruded shape member made of aluminum alloy is friction stir welded to the second extruded shape member made of aluminum alloy, and the first and second extruded shape members made of aluminum alloy are friction stir welded to the stainless steel panel.
24. The method for manufacturing a structure according to the aforementioned 22, wherein
   the stainless steel panel arranged at an upper end or a lower end of the side structure is folded back so as to cover an inner vertical plane at an upper end or a lower end of the first or second extruded shape member made of aluminum alloy;
   the folded-back stainless steel panel is friction stir welded to the first or second extruded shape member made of aluminum alloy; and
   thereafter, an upper end or a lower end of the stainless steel panel disposed at an outer side of the side structure is folded back to an opposite side via a roller so as to cover an upper portion or a lower portion of the first or second extruded shape member made of aluminum alloy.
25. The method for manufacturing a structure according to the aforementioned 22, wherein
   the stainless steel panel arranged at an upper end or a lower end of the side structure is folded back so as to cover an upper end or a lower end and an inner plane of the first or second extruded shape member made of aluminum alloy; and
   the folded-back stainless steel panel is fixed to a vertical plane of the first or second extruded shape member made of aluminum alloy by a screw.
26. The method for manufacturing a structure according to the aforementioned 22, wherein
   a frame constituting a doorway is arranged along an opening formed to a side surface of the car body; and
   the frame is friction stir welded to the stainless steel panel from an inner side of the structure of the frame.
27. A method for manufacturing a structure comprising:
   overlapping a first extruded shape member made of aluminum alloy and a second extruded shape member made of aluminum alloy on a stainless steel panel; and
   friction stir welding either a butted portion or an overlapped portion between the first extruded shape member and the second extruded shape member made of aluminum alloy from a portion corresponding to an inner side of the structure, and friction stir welding the same to the stainless steel panel.
28. The method for manufacturing a structure according to the aforementioned 27, wherein
   friction stir welding of the first or second extruded shape member to the stainless steel panel is performed intermittently along a longitudinal direction of the friction stir welding.
29. The method for manufacturing a structure according to the aforementioned 27, wherein
   the stainless steel panel is composed of two stainless steel panels, wherein a width-direction end of one of the stainless steel panels is butted against or overlapped with a width-direction end of the other stainless steel panel; and
   the butted portion or the overlapped portion of the stainless steel panels is friction stir welded to the first and second extruded shape members made of aluminum alloy.
30. The method for manufacturing a structure according to the aforementioned 27, wherein
   the stainless steel panel is composed of two stainless steel panels, wherein a width-direction end of a first stainless steel panel is butted against or overlapped with a width-direction end of a second other stainless steel panel of the two panels;
   the first extruded shape member made of aluminum alloy is friction stir welded to the second extruded shape member made of aluminum alloy;
   the first and second extruded shape members made of aluminum alloy are butted against or overlapped with one another; and
   the butted portion or the overlapped portion of the first and second extruded shape members made of aluminum alloy are friction stir welded intermittently to the stainless steel panels.
31. The method for manufacturing a structure according to the aforementioned 27, wherein
   the structure is a side structure of a car body, and the stainless steel panel arranged at an upper end or a lower end of the side structure at an outer side thereof is folded back toward an inner plane at an upper end or a lower end of the first or second extruded shape member made of aluminum alloy; and
   the stainless steel panel is friction stir welded to the first or second extruded shape member made of aluminum alloy.
32. A method for manufacturing a structure comprising:
   providing a space for forming a clearance on a surface facing the other member on at least either a stainless steel panel or an extruded shape member made of aluminum alloy; and
   overlapping the extruded shape member made of aluminum alloy on the stainless steel panel and friction stir welding a portion without the clearance.
33. The method for manufacturing a structure according to the aforementioned 32, further comprising:
   arranging a heat insulation member in the clearance; and
   performing friction stir welding thereafter.
34. A method for manufacturing a structure comprising:
   overlapping an extruded shape member made of aluminum alloy on a stainless steel panel with a clearance therebetween; and
   friction stir welding the extruded shape member made of aluminum alloy to the stainless steel panel at an overlapped portion without the clearance.
35. The method for manufacturing a structure according to the aforementioned 34, further comprising:
   overlapping the extruded shape member made of aluminum alloy via a heat insulation member on the stainless steel panel; and
   friction stir welding the extruded shape member made of aluminum alloy to the stainless steel panel at an overlapped portion without the heat insulation member.
36. The method for manufacturing a structure according to the aforementioned 34, comprising:
   arranging a heat insulation member in the clearance; and
   performing friction stir welding thereafter.
37. A method for manufacturing a structure comprising:
   overlapping an extruded shape member made of aluminum alloy on a stainless steel panel; and
   friction stir welding the extruded shape member made of aluminum alloy on the stainless steel panel being heated; wherein
   the friction stir welding is performed at both width-direction ends of the extruded shape member made of aluminum alloy.
38. A method for manufacturing a structure comprising:
   overlapping an extruded shape member made of aluminum alloy on a stainless steel panel having beads in the form of a circular arc protruded toward an outer side of the structure along a longitudinal direction thereof; and
   friction stir welding the extruded shape member made of aluminum alloy on the stainless steel panel.
39. A structure comprising:
   one or a plurality of extruded shape members made of aluminum alloy overlapped on a stainless steel panel; wherein
   a butted portion or an overlapped portion between extruded shape members made of aluminum alloy are friction stir welded, and the butted portion or the overlapped portion and the stainless steel panel are friction stir welded, wherein the friction stir welding is performed intermittently along a longitudinal direction of the friction stir welding.
40. The structure according to the aforementioned 39, wherein
   a plurality of friction stir welding lines are formed by welding the extruded shape member made of aluminum alloy and the stainless steel panel; and
   friction stir welding is performed intermittently so that a region in which friction stir welding is performed continuously in one of the plurality of friction stir welding lines is corresponding to the region in which the adjacent friction stir welding line is not continuous.
41. The structure according to the aforementioned 39, wherein
   a projection protruded toward an inner side of the structure is formed to the extruded shape member made of aluminum alloy at a portion where the extruded shape member made of aluminum alloy and the stainless steel panel are to be friction stir welded; and
   the projection is friction stir welded to the extruded shape members made of aluminum alloy, and also friction stir welded to the stainless steel panel.
42. A structure comprising:
   an extruded shape member made of aluminum alloy overlapped on a stainless steel panel; wherein
   the stainless steel panel and the extruded shape member made of aluminum alloy are friction stir welded; and
   the friction stir welding is performed intermittently along the longitudinal direction of friction stir welding.
43. The structure according to the aforementioned 42, wherein
   the extruded shape member made of aluminum alloy is composed of a single shape member portion in which there is no face plate on an inner side of the structure, and a hollow shape member portion disposed on both width-direction sides of the single shape member portion and having a face plate on the inner side thereof; and
   a face plate on an outer side of the structure of the single shape member portion is friction stir welded to the stainless steel panel.
44. The structure according to the aforementioned 42, wherein
   the extruded shape member made of aluminum alloy is composed of a single shape member portion in which there is no face plate on an inner side of the structure, and a hollow shape member portion disposed on both width-direction sides of the single shape member portion and having a face plate on the inner side thereof;
   a projection protruding toward an inner side of the structure is formed on an inner side of a face plate facing an outer side of the structure of the single shape member portion; and
   the projection is friction stir welded to the stainless steel panel.
45. The structure according to the aforementioned 42, wherein
   the extruded shape member made of aluminum alloy is composed of a single shape member portion in which there is no face plate on an inner side of the structure, and a hollow shape member portion disposed on both width-direction sides of the single shape member portion and having a face plate on the inner side thereof;
   a projection protruding toward an inner side of the structure is formed on a face plate facing an outer side of the structure of the single shape member portion; and
   the projection is friction stir welded intermittently to the stainless steel panel.
46. The structure according to the aforementioned 42, wherein
   the extruded shape member made of aluminum alloy is composed of a single shape member portion in which there is no face plate on an inner side of the structure, and a hollow shape member portion disposed on both width-direction sides of the single shape member portion and having a face plate on the inner side thereof;
   a face plate facing an outer side of the structure of the single shape member portion is friction stir welded to the stainless steel panel; and
   an inner face plate of the hollow shape member portion surrounding the portion welded via friction stir welding and the inner face plate of an adjacent hollow shape member portion are connected via a connecting member.
47. A structure comprising:
   a first extruded shape member made of aluminum alloy and a second extruded shape member made of aluminum alloy overlapped on a stainless steel panel; and
   having a butted portion or an overlapped portion between the first and second extruded shape members made of aluminum alloy friction stir welded to the stainless steel panel.
48. The structure according to the aforementioned 47, wherein
   the friction stir welding of the butted portion or the overlapped portion with the stainless steel panel is performed intermittently along a longitudinal direction of the friction stir welding.
49. A structure comprising:
   a first stainless steel panel and a second stainless steel panel having their width-direction ends butted against each other or overlapped with one another;
   a first extruded shape member made of aluminum alloy overlapped on the first stainless steel panel and a second extruded shape member made of aluminum alloy overlapped on the second stainless steel panel, wherein a width-direction end of the first extruded shape member made of aluminum alloy is butted against or overlapped with a width-direction end of the second extruded shape member made of aluminum alloy;
   the butted or overlapped portion of the extruded shape members made of aluminum alloy and the butted or overlapped portion of the stainless steel panel are positioned substantially at a same position with respect to a direction orthogonal to a direction of extrusion of the extruded shape member made of aluminum alloy; and
   the butted portion or the overlapped portion of the extruded shape members made of aluminum alloy is friction stir welded to the butted portion or the overlapped portion of the stainless steel panel.
50. The structure according to the aforementioned 49, wherein
   the butted portion or the overlapped portion of the extruded shape members made of aluminum alloy and the butted portion or the overlapped portion of the stainless steel panels are friction stir welded intermittently along a longitudinal direction of friction stir welding.
51. The structure according to the aforementioned 49, wherein
   a plurality of sets of extruded shape members are arranged, each set composed of the first and second extruded shape members made of aluminum alloy, and one or a plurality of sets of stainless steel panels are arranged, each set composed of the first and second stainless steel panels;
   a plurality of friction stir welding lines between extruded shape members made of aluminum alloy or between the extruded shape member made of aluminum alloy and the stainless steel panel are formed in a direction orthogonal to the direction of the friction stir welding; and
   the friction stir welding is performed so that a continuously friction stir welded region between extruded shape members of aluminum alloy orthogonal to the longitudinal direction of the friction stir welding corresponds to the region in which the extruded shape member made of aluminum alloy and the stainless steel panel are not friction stir welded along a longitudinal direction of the friction stir welded line substantially adjacent and parallel thereto.
52. The structure according to the aforementioned 49, wherein
   the butted portions of the first and second extruded shape members made of aluminum alloy have projections protruded toward an inner side of the structure, or the overlapped portion has a projection protruded toward an inner side of the structure; and
   the projections of the extruded shape members made of aluminum alloy or the projection on the overlapped portion is friction stir welded to the extruded shape members made of aluminum alloy, and in addition, the projection is friction stir welded to the stainless steel panel.
53. The structure according to the aforementioned 49, wherein
   the butted portions of the first and second extruded shape members made of aluminum alloy have projections protruded toward an inner side of the structure, or the overlapped portion has a projection protruded toward an inner side of the structure; and
   the projections of the extruded shape members made of aluminum alloy or the projection on the overlapped portion is friction stir welded continuously to the extruded shape members made of aluminum alloy with respect to a longitudinal direction of the friction stir welding, and in addition, the projection is friction stir welded intermittently to the stainless steel panel with respect to the longitudinal direction.
54. The structure according to the aforementioned 49, wherein
   the butted portions or the overlapped portions of the first extruded shape member and the second extruded shape member made of aluminum alloy are friction stir welded; and
   an inner face plate of the first extruded shape member made of aluminum alloy and an inner face plate of the second extruded shape member made of aluminum alloy at both width-direction sides of the friction stir welded portion are connected via a connecting plate.
55. A structure comprising:
   at least two extruded shape members made of aluminum alloy overlapped on a stainless steel panel;
   a width-direction end of a first extruded shape member made of aluminum alloy is butted against or overlapped with a width-direction end of a second extruded shape member made of aluminum alloy of the two extruded shape members;
   a plurality of sets of extruded shape members are arranged, each set composed of the first and second extruded shape members made of aluminum alloy;
   if the stainless steel panel is composed of a single panel, the butted portion or the overlapped portion of the extruded shape members made of aluminum alloy is arranged within the single panel, and if the stainless steel panel is composed of a plurality of panels, a width-direction end of one stainless steel panel is butted against or overlapped with that of the other panel;
   the butted portion or the overlapped portion of the extruded shape members made of aluminum alloy is friction stir welded continuously along a longitudinal direction of friction stir welding; and
   the extruded shape members made of aluminum alloy is friction stir welded intermittently to the butted portion or the overlapped portion of the stainless steel panel along the longitudinal direction of friction stir welding.
56. The structure according to the aforementioned 55, wherein
   a region where the continuous friction stir welding is performed corresponds to the region where friction stir welding is not performed in an adj acent friction stir welded line parallel in a direction orthogonal to a longitudinal direction of the continuous friction stir welding.
57. A structure comprising:
   a first extruded shape member made of aluminum alloy and a second extruded shape member made of aluminum alloy overlapped on a stainless steel panel;
   a width-direction end of the first extruded shape member made of aluminum alloy is butted against or overlapped on a width-direction end of the second extruded shape member made of aluminum alloy;
   the first and second extruded shape members made of aluminum alloy are friction stir welded and the same are friction stir welded to the stainless steel panel; and
   a side structure of a car body is formed by arranging the stainless steel panel on an outer side than the first and second extruded shape members made of aluminum alloy.
58. The structure according to the aforementioned 57, wherein
   the stainless steel panel arranged at an upper end or a lower end of the side structure is folded back so as to cover an inner vertical plane at an upper end or a lower end of the first or second extruded shape member made of aluminum alloy;
   the folded-back stainless steel panel is arranged on the first or second extruded shape member made of aluminum alloy; and
   the first extruded shape member made of aluminum alloy is friction stir welded to the second extruded shape member made of aluminum alloy, and the first and second extruded shape members made of aluminum alloy are friction stir welded to the stainless steel panel.
59. The structure according to the aforementioned 57, wherein
   the stainless steel panel arranged at an upper end or a lower end of the side structure is folded back so as to cover an upper end or a lower end and an inner plane of the first or second extruded shape member made of aluminum alloy; and
   the folded-back stainless steel panel is fixed to a vertical plane of the first or second extruded shape member made of aluminum alloy by a screw.
60. The structure according to the aforementioned 57, wherein
   a frame constituting a doorway is arranged along an opening formed to a side surface of the car body; and
   the frame is friction stir welded to the stainless steel panel from an inner side of the structure of the frame.
61. A structure comprising:
   a first extruded shape member made of aluminum alloy and a second extruded shape member made of aluminum alloy overlapped on a stainless steel panel; and
   either a butted portion or an overlapped portion between the first extruded shape member and the second extruded shape member made of aluminum alloy is friction stir welded from a portion corresponding to an inner side of the structure, and the same is friction stir welded to the stainless steel panel.
62. The method for manufacturing a structure according to the aforementioned 61, wherein
   the friction stir welding of the first or second extruded shape member made of aluminum alloy to the stainless steel panel is performed intermittently along a longitudinal direction of the friction stir welding.
63. The structure according to the aforementioned 61, wherein
   the stainless steel panel is composed of two stainless steel panels, wherein a width-direction end of one of the stainless steel panels is butted against or overlapped with a width-direction end of the other stainless steel panel; and
   the butted portion or the overlapped portion of the stainless steel panels is friction stir welded to the first and second extruded shape members made of aluminum alloy.
64. The structure according to the aforementioned 61, wherein
   the stainless steel panel is composed of two stainless steel panels, wherein a width-direction end of a first stainless steel panel is butted against or overlapped with a width-direction end of a second other stainless steel panel of the two panels;
   the first extruded shape member made of aluminum alloy is friction stir welded to the second extruded shape member made of aluminum alloy;
   the first and second extruded shape members made of aluminum alloy are butted against or overlapped with one another; and
   the butted portion or the overlapped portion of the first and second extruded shape members made of aluminum alloy are friction stir welded intermittently to the stainless steel panels.
65. The structure according to the aforementioned 61, wherein
   the structure is a side structure of a car body, and the stainless steel panel arranged at an upper end or a lower end of the side structure at an outer side thereof is folded back toward an inner plane at an upper end or a lower end of the first or second extruded shape member made of aluminum alloy; and
   the stainless steel panel is friction stir welded to the first or second extruded shape member made of aluminum alloy.
66. A structure comprising:
   a space for forming a clearance on a surface facing the other member on at least either a stainless steel panel or an extruded shape member made of aluminum alloy; wherein
   the extruded shape member made of aluminum alloy is overlapped on the stainless steel panel and a portion not having the clearance is friction stir welded.
67. The structure according to the aforementioned 66, further comprising:
   a heat insulation member arranged in the clearance.
68. A structure comprising:
   an extruded shape member made of aluminum alloy overlapped on a stainless steel panel with a clearance therebetween; and
   the extruded shape member made of aluminum alloy is friction stir welded to the stainless steel panel at an overlapped portion without the clearance.
69. The structure according to the aforementioned 68, wherein
   the extruded shape member made of aluminum alloy is overlapped via a heat insulation member on the stainless steel panel; and
   the extruded shape member made of aluminum alloy is friction stir welded to the stainless steel panel at an overlapped portion without the heat insulation member.
70. The structure according to the aforementioned 68, wherein
   a heat insulation member is arranged in the clearance.
71. A structure comprising:
   an extruded shape member made of aluminum alloy overlapped on a stainless steel panel; wherein
   the extruded shape member made of aluminum alloy is friction stir welded to the stainless steel panel being heated; and
   the friction stir welding is performed at both width-direction ends of the extruded shape member made of aluminum alloy.
72. A structure comprising:
   an extruded shape member made of aluminum alloy overlapped on a stainless steel panel having beads in the form of a circular arc protruded toward an outer side of the structure along a longitudinal direction thereof; wherein
   the extruded shape member made of aluminum alloy is friction stir welded on the stainless steel panel.
73. The structure according to the aforementioned 72, wherein
   a connecting portion between the beads and the stainless steel panel is formed in a circular arc, and the center of the circular arc is positioned toward the protruded side of the circular arc.
74. A friction stir welding apparatus comprising:
   a base for placing a stainless steel panel and an extruded shape member made of aluminum alloy on the stainless steel panel, the base having a heater for heating the stainless steel panel; and
   a rotary tool for friction stir welding provided above the base for friction stir welding the stainless steel panel to the extruded shape member made of aluminum alloy.
75. A railway vehicle comprising:
   a width-direction end of a roof structure mounted on a projection protruded from a side structure toward the roof structure, and a Huckbolt (trade name) fastened from above to fix the mounted portion to the projection.
76. The railway vehicle according to the aforementioned 75, wherein
   the portion having the Huckbolt (trade name) is at a low portion at both width-direction ends of a car body, a bottom portion thereof constituting a continuous gutter along a longitudinal direction of the car body; and
   the gutter and the longitudinal end of the roof structure are covered by an end structure.
77. A railway vehicle comprising:
   a projection protruding toward an underframe formed on a side beam at a low portion of a side structure, the projection overlapped on an upper surface of a hollow shape member constituting the underframe;
   a Huckbolt (trade name) engaging the overlapped portion from above;
   a spacer arranged between the projection and the hollow shape member; and
   a projection protruded downward from the hollow shape member overlapped on a vertical plane of the side beam, wherein a second Huckbolt is fastened to the overlapped portion from an inner side of the car body in the lateral direction.
78. The railway vehicle according to the aforementioned 77, wherein
   a bottom portion of the Huckbolt (trade name) engaging the projection on the side beam and the upper surface of the hollow shape member of the underframe is arranged in a space defined by upper and lower face pates of the hollow shape member and a rib for connecting the upper and lower face plates.
79. The railway vehicle according to the aforementioned 77, wherein
   a head portion of the Huckbolt (trade name) engaging the projection and the upper surface of the hollow shape member of the underframe is covered by a floor panel disposed above the hollow shape member.
80. A railway vehicle comprising:
   a first hollow shape member of an underframe having a projection rising along a vertical plane of a second hollow shape member of a side structure;
   a Huckbolt (trade name) engaging the projection from an inner side of the car body to the first hollow shape member; and
   a projection protruding downward from the hollow shape member being overlapped on a vertical plane of a side beam, wherein a second Huckbolt fastens the overlapped portion from the inner side of the car body in the lateral direction.
81. A railway vehicle comprising:
   a heat insulation member disposed on a side structure or a roof structure on an inner side of a car body thereof, the heat insulation member covered by an interior panel; wherein
   when the interior panel is attached to the car body, a circumferential end portion thereof is fixed to a rail protruded from the side structure or the roof structure toward an inner side of the car body;
   the rail is extended along a longitudinal direction of the car body;
   the rail has a groove disposed along the longitudinal direction at an end toward the inner side of the car body, the end of the interior panel inserted to the groove; and
   a press-fit member is inserted between the end of the interior panel and the rail, or between adjacent interior panel ends.

## Claims

1. A method for manufacturing a structure comprising:
overlapping one or a plurality of extruded shape members made of aluminum alloy on a stainless steel panel; and
friction stir welding either a butted portion or an overlapped portion between extruded shape members made of aluminum alloy, and friction stir welding the butted portion or the overlapped portion to the stainless steel panel, wherein the friction stir welding is performed intermittently along a longitudinal direction of the friction stir welding.

2. A structure comprising:
one or a plurality of extruded shape members made of aluminum alloy overlapped on a stainless steel panel; wherein
a butted portion or an overlapped portion between extruded shape members made of aluminum alloy are friction stir welded, and the butted portion or the overlappedportion and the stainless steel panel are friction stir welded, wherein the friction stir welding is performed intermittently along a longitudinal direction of the friction stir welding.

3. A friction stir welding apparatus comprising:
a base for placing a stainless steel panel and an extruded shape member made of aluminum alloy on the stainless steel panel, the base having a heater for heating the stainless steel panel; and
a rotary tool for friction stir welding provided above the base for friction stir welding the stainless steel panel to the extruded shape member made of aluminum alloy.

4. A railway vehicle comprising:
a width-direction end of a roof structure mounted on a projection protruded from a side structure toward the roof structure, and a Huckbolt (trade name) fastened from above to fix the mounted portion to the projection.
